# EUROPEAN PATENT SPECIFICATION

(11) **EP 2 474 893 B1**
(45) Date of publication and mention of the grant of the patent: **22.10.2014**
(21) Application number: 11009656.7
(22) Date of filing: 07.12.2011
(51) Int. Cl.: G06F 3/0482, G06F 3/0488

(54) **Method of controlling image display device using display screen, and image display device thereof**
Verfahren zur Steuerung einer Bildanzeigevorrichtung mit Anzeigebildschirm und Bildanzeigevorrichtung dafür
Procédé de contrôle de l'affichage d'images au moyen d'un écran d'affichage et dispositif d'affichage d'images correspondant

(30) Priority: 07.01.2011 KR 20110001756; 31.03.2011 KR 20110029316
(43) Date of publication of application: 11.07.2012
(73) Proprietor: LG Electronics Inc., Seoul 150-721 (KR)
(72) Inventor: Jeong, Youngho, Seoul 137-724 (KR)
(74) Representative: Frenkel, Matthias Alexander

(56) References cited:
- EP-A1- 2 257 052
- WO-A1-2009/032998
- WO-A2-01/91057

## Description

This application claims the benefit of earlier filing date and right of priority to Korean Patent Application Nos.10-2011-0001756, filed on January 7, 2011, and 10-2011-0029316, filed on March 31, 2011.

### BACKGROUND OF THE INVENTION

### Field of the Invention

The present invention relates to an image display device and a method of operating the same, and more particularly, to an image display device capable of improving user convenience and a method of operating the same.

### Discussion of the Related Art

An image display device includes, for example, a function for receiving and processing a broadcast image viewable by a user. The image display device displays a broadcast, which is selected by the user from among broadcast signals transmitted from a broadcast station, on a display. Currently broadcasters are transitioning from analog to digital broadcasting.

Digital broadcasting refers to broadcasting of digital video and audio signals. The digital broadcast has low data loss due to robustness against external noise, error correction, high resolution and a high-definition screen, as compared with an analog broadcast. In addition, digital broadcasting can provide a bidirectional service unlike analog broadcasting.

In order to use digital broadcasts, multimedia device performance has been improved and functions thereof have been diversified. As the performance of the multimedia device has been improved, services available in the multimedia device, such as an Internet service, a Video On Demand (VOD) and an electronic album service, have also been diversified.

If an Internet service is used in an image display device, due to a limitation of an input unit of the image display device, a user must perform several operations in order to perform a desired operation in the image display device. Accordingly, there is a need for user interface improvement.

WO 2009/032998 A1 relates to controlling a media system using a remote controller or remote wand. The wand may be operative to control the movement of a cursor displayed on a screen by the position and orientation at which the wand is held. The user may use the wand to control a plurality of operations and applications that may be available from the media system.

EP 2 257 052 A1 relates to an image display device being controllable by a pointing device including displaying a pointer that moves in correspondence with an operation of the pointing device on the display. Further, an object for receiving a command or representing image display device-related information is displayed on the display when the pointer moves to a predetermined area of the display.

### SUMMARY OF THE INVENTION

It is the object of the invention to provide an image display device and method of setting a user interface that is more user convenient. This object is solved by the subject-matter of the independent claims. Preferred embodiments are defined by the dependent claims.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a method of setting a user interface of an image display device includes receiving a user interface setting signal, displaying a first list including execution menu items of available applications and functions of the image display device, displaying a predetermined region of a display screen as a mapping region of the execution menu items included in the first list, receiving a mapping signal for mapping the execution menu items included in the first list to the mapping region, and storing user interface setting information based on the received mapping signal.

In another aspect of the present invention, an image display device for setting a user interface includes a display configured to display content received by the image display device and a pointer for controlling the image display device, a user interface configured to receive a movement signal and a control signal of the pointer, a user interface setting unit configured to store a user interface setting item, and a controller configured to display a first list including execution menu items of available applications and function of the image display device, display a predetermined region of a display screen as a mapping region of the execution menu items included in the first list, and receive a mapping signal for mapping the execution menu items included in the first list to the mapping region, if a user interface setting signal is received.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a schematic diagram showing an example of a broadcast system including an image display device according to an embodiment of the present invention;
FIG. 2 is a schematic diagram showing another example of a broadcast system including an image display device according to another embodiment of the present invention;
FIG. 3 is a diagram showing steps in which the image display device shown in FIG. 1 or 2 accesses a service provider and receives channel information, etc.;
FIG. 4 is a diagram showing an example of data used in the steps shown in FIG. 3;
FIG. 5 is a diagram showing an example of the image display device shown in FIG. 1 or 2 in greater detail;
FIG. 6 is a diagram showing another example of the image display device shown in FIG. 1 or 2 in greater detail;
FIG. 7 is a diagram showing the controller shown in FIG. 6 in greater detail;
FIGs. 8 and 9 are diagrams showing any one of the image display devices separately as a set-top box and a display device according to embodiments of the present invention;
FIG. 10 is a diagram illustrating an operation for communicating with third devices in either of the image display devices according to the embodiments of the present invention;
FIG. 11 is a block diagram of a controller shown in FIG. 6;
FIG. 12 is a diagram showing an example of a platform architecture for either of the image display devices according to the embodiments of the present invention;
FIG. 13 is a diagram showing another example of a platform architecture for either of the image display devices according to the embodiments of the present invention;
FIG. 14 is a diagram showing a method of controlling a remote controller for controlling any one of the image display devices according to the embodiments of the present invention;
FIG. 15 is a block diagram of a remote controller for controlling either of the image display devices according to the embodiments of the present invention;
FIG. 16 is a diagram showing a first embodiment of a user interface (UI) in either of the image display devices according to the embodiments of the present invention;
FIG. 17 is a diagram showing a second embodiment of a UI either of the image display devices according to the embodiments of the present invention;
FIG. 18 is a diagram showing a third embodiment of a UI either of the image display devices according to the embodiments of the present invention;
FIG. 19 is a diagram showing a fourth embodiment of a UI either of the image display devices according to the embodiments of the present invention;
FIG. 20 is a flowchart illustrating a process of performing a predetermined operation in an image display device by movement of a pointer of the image display device according to an embodiment of the present invention;
FIG. 21 is a flowchart illustrating a process of setting a user interface according to an embodiment of the present invention;
FIG. 22 is a diagram showing a display screen including a manipulation mode setting notification window according to an embodiment of the present invention;
FIG. 23 is a diagram showing a display screen including an Internet address window according to an embodiment of the present invention;
FIG. 24 is a diagram showing a display screen including a bookmark window according to an embodiment of the present invention;
FIG. 25 is a diagram showing a display screen including a web page according to an embodiment of the present invention;
FIG. 26 is a diagram showing a display screen including a related-keyword window according to an embodiment of the present invention;
FIG. 27 is a diagram showing a display screen including a simple search window according to an embodiment of the present invention;
FIG. 28 is a diagram showing a display screen including a search result page according to an embodiment of the present invention;
FIG. 29 is a diagram showing a display screen including a content playback window and a web page according to an embodiment of the present invention;
FIG. 30 is a diagram showing a display screen including a content playback window and a search result page according to an embodiment of the present invention;
FIG. 31 is a diagram showing a display screen including a screen switch confirmation menu according to an embodiment of the present invention;
FIG. 32 is a diagram showing a display screen for confirming and utilizing a user interface according to an embodiment of the present invention;
FIG. 33 is a diagram showing a display screen including a Social Network Service (SNS) utilization menu according to an embodiment of the present invention;
FIG. 34 is a diagram showing a display screen including an email confirmation menu according to an embodiment of the present invention;
FIG. 35 is a diagram showing a display screen including an Internet address window and a web page according to an embodiment of the present invention;
FIG. 36 is a diagram showing a user interface database according to an embodiment of the present invention;
FIG. 37 is a diagram showing a user interface database according to another embodiment of the present invention; and
FIG. 38 is a diagram showing a display screen including a user interface setting menu according to an embodiment of the present invention.

### DETAILED DESCRIPTION OF THE INVENTION

Exemplary embodiments of the present invention will be described with reference to the attached drawings.

The terms "module" and "unit" attached to describe the names of components are used herein to help the understanding of the components and thus should not be considered as having specific meanings or roles. Accordingly, the terms "module" and "unit" may be used interchangeably.

An image display device as set forth herein is an intelligent image display device equipped with a computer support function in addition to a broadcast reception function, for example. Since an Internet function is added to a broadcast reception function, the image display device may have user-friendly interfaces such as a handwriting input device, a touchscreen, or a pointing device. Further, because the image display device supports wired or wireless Internet, it is capable of e-mail transmission/reception, Web browsing, banking, gaming, etc. by connecting to the Internet or a computer. To implement these functions, the image display device may operate based on a standard general-purpose Operating System (OS).

Various applications can be freely added to or deleted from, for example, a general-purpose OS kernel of the image display device according to the present invention. Therefore, the image display device may perform a number of user-friendly functions. The image display device may be a network TV, a Hybrid broadcast broadband TV (HBBTV), a smart TV, etc. for example. The image display device is also applicable to smart phones.

Embodiments of the present invention will be described in detail with reference to the attached drawings, but it should be understood that they are merely illustrative of the present invention and should not be interpreted as limiting the scope of the present invention.

In addition, although the terms used in the present invention are selected from generally known and used terms, some of the terms mentioned in the description of the present invention, the detailed meanings of which are described in relevant parts of the description herein, have been selected at the discretion of the applicant. Furthermore, the present invention must be understood, not simply by the actual terms used but by the meanings of each term lying within.

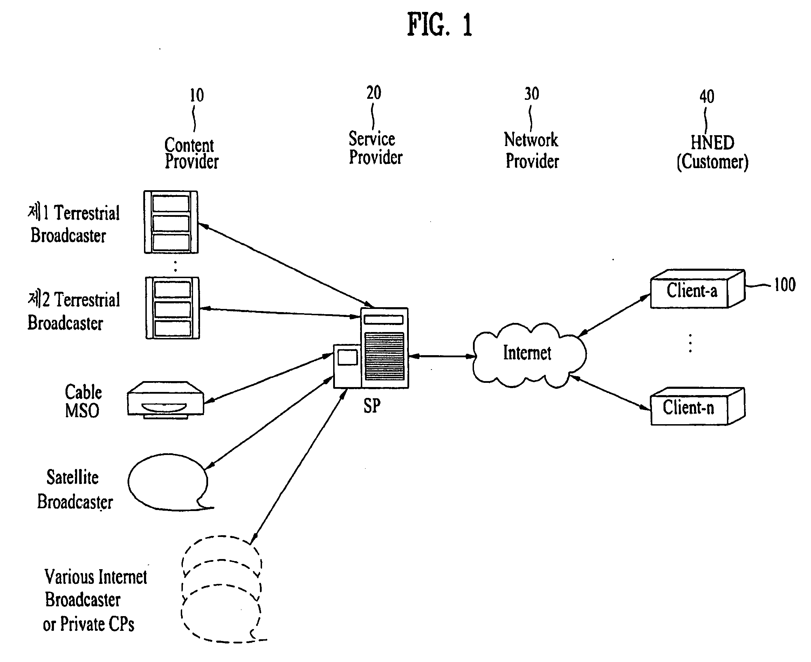

FIG. 1 illustrates the overall configuration of a broadcast system including an image display device according to an embodiment of the present invention.

As shown in FIG. 1, the broadcast system including the image display device according to the embodiment of the present invention may include a Content Provider (CP) 10, a Service Provider (SP) 20, a Network Provider (NP) 30, and a Home Network End Device (HNED) 40. The HNED 40 corresponds to, for example, a client 100 which is an image display device according to an embodiment of the present invention. The client 100 corresponds to the image display device according to the embodiment of the present invention, and the image display device may be a network TV, a smart TV, an Internet Protocol TV (IPTV), etc.

The CP 10 creates and provides a variety of content. The CP 10 may be, for example, a terrestrial broadcaster, a cable System Operator (SO) or Multiple System Operator (MSO), a satellite broadcaster, or an Internet broadcaster, as illustrated in FIG. 1.

Besides broadcast content, the CP 10 may provide various applications, which will be described later in detail.

The SP 20 may provide content received from the CP 10 as a service package. For instance, the SP 20 may package first terrestrial broadcasts, second terrestrial broadcasts, cable MSOs, satellite broadcasts, various Internet broadcasts, and applications and provide the package to users.

The SP 20 may unicast or multicast a service to the client 100. Unicast is a form of transmission in which data is sent from only one transmitter to only one receiver. In an example of unicast transmission, upon reception of a request for data from a receiver, a server transmits the data to only one receiver. Multicast is a type of transmission or communication in which a transmitter transmits data to a group of receivers. For example, a server may transmit data to a plurality of pre-registered receivers at one time. For multicast registration, the Internet Group Management Protocol (IGMP) may be used.

The NP 30 may provide a network over which a service is provided to the client 100. The client 100 may construct a home network end user (HNED) and receive a service over the HNED.

Content transmitted in the above-described system including the image display device may be protected through conditional access or content protection. CableCard and Downloadable Conditional Access System (DCAS) are examples of such conditional access or content protection systems.

The client 100 may also transmit content over a network. In this case, the client 100 serves as a CP and thus the CP 10 may receive content from the client 100. Therefore, an interactive content service or data service can be provided.

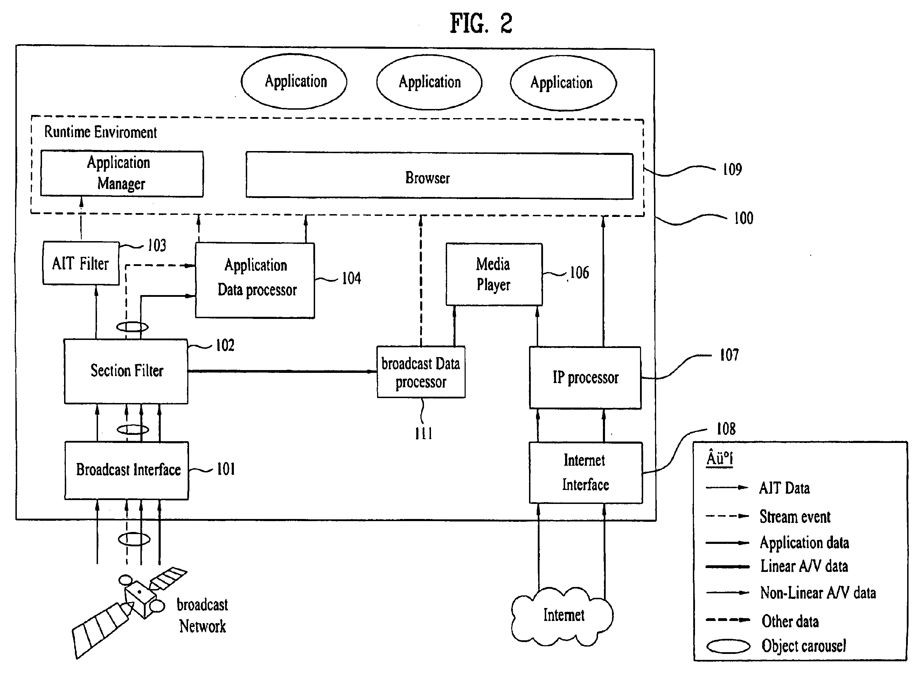

FIG. 2 illustrates the overall configuration of a broadcast system including an image display device according to another embodiment of the present invention.

As shown in FIG. 2, the image display device 100 according to another embodiment of the present invention is connected to a broadcast network and the Internet. The image display device 100 is, for example, a network TV, a smart TV, an HBBTV, etc.

The image display device 100 includes, for example, a broadcast interface 101, a section filter 102, an Application Information Table (AIT) filter 103, an application data processor 104, a broadcast data processor 111, a media player 106, an Internet Protocol (IP) processor 107, an Internet interface 108, and a runtime module 109.

The image display device 100 receives AIT data, real-time broadcast content, application data, and stream events through the broadcast interface 101. The real-time broadcast content may be referred to as linear Audio/Video (A/V) content.

The section filter 102 performs section filtering on the four types of data received through the broadcast interface 101, and outputs the AIT data to the AIT filter 103, the linear A/V content to the broadcast data processor 111, and the stream events and application data to the application data processor 104.

Meanwhile, the image display device 100 receives non-linear A/V content and application data through the Internet interface 108. The non-linear A/V content may be, for example, a Content On Demand (CoD) application.

The non-linear A/V content and the application data are transmitted to the media player 106 and the runtime module 109, respectively.

The runtime module 109 includes, for example, an application manager and a browser as illustrated in FIG. 2. The application manager controls the life cycle of an interactive application using the AIT data, for example. The browser displays and processes the interactive application.

The game application according to one embodiment of the present invention is received through the broadcast interface 101 or the Internet interface 108 shown in FIG. 2.

The game application received through the broadcast interface 101 is transmitted to the runtime module 109 through the application data processor 104. The game application received through the Internet interface 108 is transmitted to the runtime module 109 through the IP processor 107.

The runtime module 109 executes the game application.

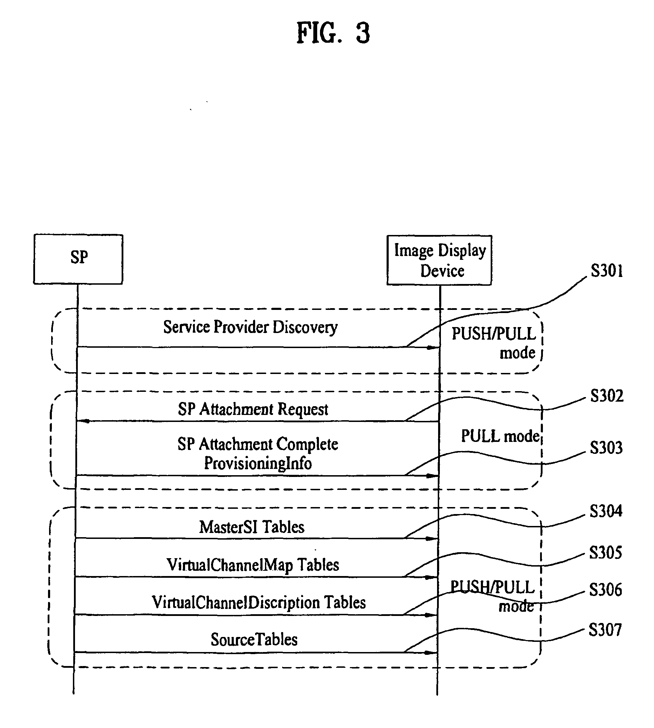

FIG. 3 is a diagram showing steps in which the image display device shown in FIG. 1 or 2 accesses an SP and receives channel information, etc. FIG. 3 is purely exemplary and the method shown in FIG. 3 does not limit the scope of the present invention.

The SP performs an SP discovery operation (S301). The image display device transmits an SP attachment request signal (S302). Upon completion of attachment to the SP, the image display device receives provisioning information from the SP (S303). Further, the image display device receives Master System Information (SI) Tables (S304), receives Virtual Channel Map Tables (S305), receives Virtual Channel Description Tables (S306), and receives Source Tables from the SP (S307).

More specifically, SP Discovery is a process by which SPs that provide IPTV services search for servers providing services to the SPs.

In order to receive information (e.g., SP discovery information) about the service discovery (SD) servers, an SD server address list can be detected, for example, using three methods, specifically use of an address preset in the image display device or an address manually set by a user, Dynamic Host Configuration Protocol (DHCP)-based SP Discovery, and Domain Name System Service (DNS SRV)-based SP Discovery. The image display device accesses a specific SD server using the SD server address list obtained through one of the above three methods and receives an SP Discovery record from the specific SD server. The Service Provider Discovery record includes information needed to perform Service Discovery on an SP basis. The image display device then starts a Service Discovery operation using the SP Discovery record. These operations can be performed in a push mode or a pull mode.

The image display device accesses an SP attachment server specified by an SP attachment locator included in the SP Discovery record and performs a registration procedure (or a service attachment procedure).

Further, after accessing an authentication service server of an SP specified by an SP authentication locator and performing an authentication procedure, the image display device may perform a service authentication procedure.

Once service attachment is successfully completed, a server may transmit data to the image display device in the form of a provision information table.

During service attachment, the image display device may include an Identifier (ID) and location information thereof in data and transmit the data to the service attachment server. Thus the service attachment server may specify a service that the image display device has subscribed to based on the ID and location information. In addition, the service attachment server provides, in the form of a provisioning information table, address information from which the image display device can obtain Service Information (SI). The address information corresponds to access information about a Master SI Table. This method facilitates provision of a customized service to each subscriber.

The SI is divided into a Master SI Table record for managing access information and version information about a Virtual Channel Map, a Virtual Channel Map Table for providing a list of services in the form of a package, a Virtual Channel Description Table that contains details of each channel, and a Source Table that contains access information about actual services.

The image display device shown in FIG. 3 receives the game application according to the embodiment of the present invention from the SP or a virtual channel provided by a broadcast station.

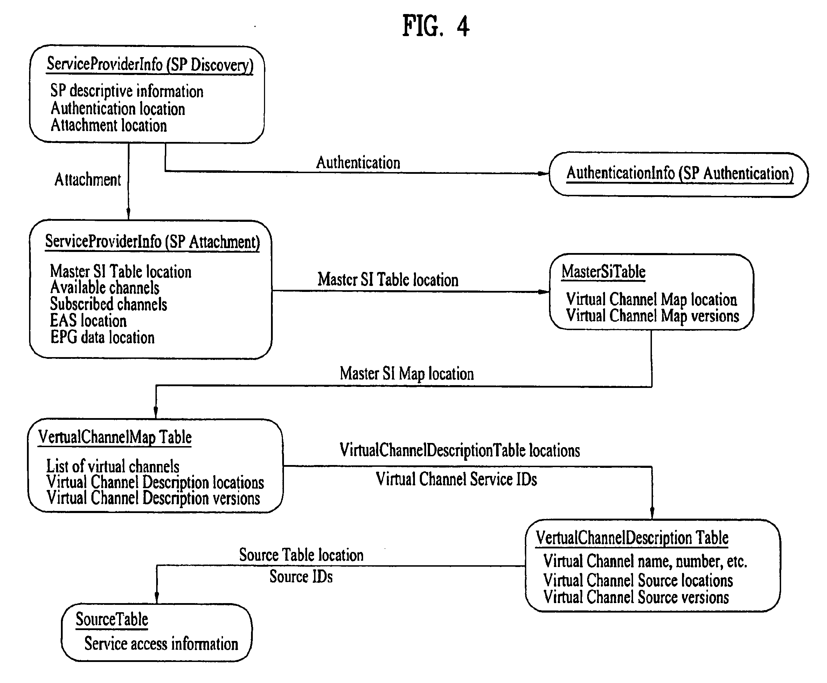

FIG. 4 is a diagram showing an example of data used in the steps shown in FIG. 3.

FIG. 4 is a detailed diagram of FIG. 3, illustrating a relationship among data in the SI.

A Master SI Table contains information about the location and version of each Virtual Channel MAP.

Each Virtual Channel MAP is identified by its Virtual Channel MAP identifier. Virtual Channel MAP Version specifies the version number of the Virtual Channel MAP. If any of the tables connected to the Master SI Table shown in FIG. 4 in the arrowed direction is modified, the versions of the modified table and overlying tables thereof (up to the Master SI Table) are incremented. Accordingly, a change in any of the SI tables can be readily identified by monitoring the Master SI Table.

For example, when the Source Table is changed, the version of the Source Table is incremented and the version of the Virtual Channel Description Table that references the Source Table is also incremented. In conclusion, a change in any lower table leads to a change in its higher tables and, eventually, a change in the Master SI Table.

One Master SI Table may exist for each SP. However, in the case where service configurations differ for regions or subscribers (or subscriber groups), an SP may have a plurality of Master SI Tables in order to provide a customized service on a unit basis. Thus it is possible to efficiently provide a customized service to a subscriber through the master SI table according to a region in which the subscriber is located and subscriber information regarding the subscriber.

A Virtual Channel Map Table may contain one or more virtual channels. A Virtual Channel Map includes not only details of the channels but information about the locations of the details of the channels. In the Virtual Channel Map Table, Virtual Channel Description Location specifies the location of a Virtual Channel Description Table including the details of the channels.

The Virtual Channel Description Table contains the details of the virtual channels. The Virtual Channel Description Table can be accessed using the Virtual Channel Description Location of the Virtual Channel Map Table.

A Source Table provides information necessary to access actual services (e.g. IP addresses, ports, AV Codecs, transmission protocols, etc.) on a service basis.

The above-described Master SI Table, the Virtual Channel Map Table, the Virtual Channel Description Table and the Source Table are delivered in four logically separate flows, in a push mode or a pull mode. For version management, the Master SI Table may be multicast and thus version changes can be monitored by receiving a multicast stream.

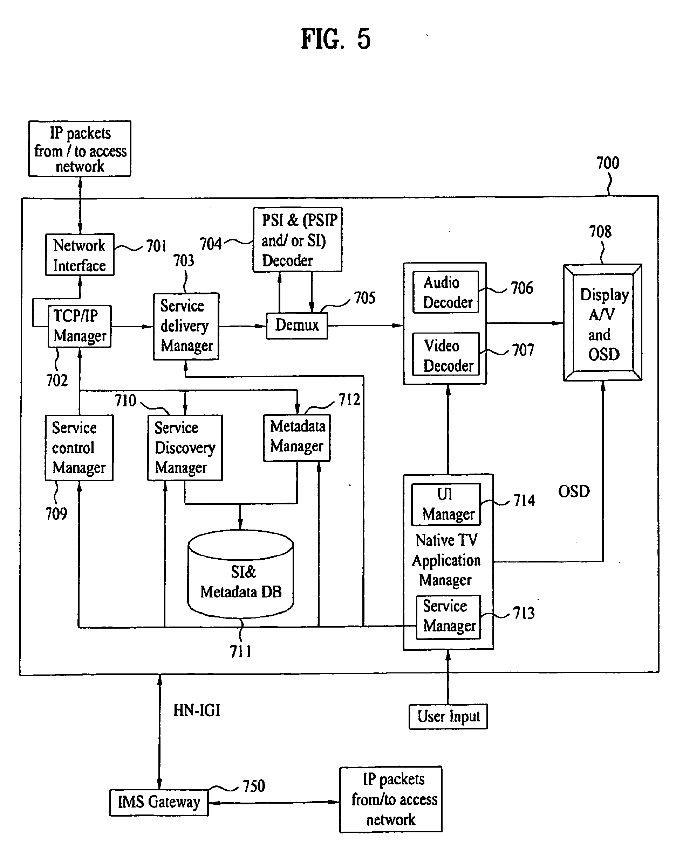

FIG. 5 is a detailed block diagram of the image display device shown in FIG. 1 or 2 according to an embodiment of the present invention. The structure of the image display device in FIG. 5 is purely exemplary and should not be interpreted as limiting the scope of the present invention.

An image display device 700 includes a network interface 701, a Transmission Control Protocol/Internet Protocol (TCP/IP) manager 702, a service delivery manager 703, a demultiplexer (DEMUX) 705, a Program Specific Information (PSI) & (Program and System Information Protocol (PSIP) and/or SI) decoder 704, an audio decoder 706, a video decoder 707, a display A/V and OSD module 708, a service control manager 709, a service discovery manager 710, a metadata manager 712, an SI & metadata database (DB) 711, a User Interface (UI) manager 714, and a service manager 713.

The network interface 701 transmits packets to and receives packets from a network. Specifically, the network interface 701 receives services and content from an SP over the network.

The TCP/IP manager 702 is involved in packet reception and transmission of the image display device 700, that is, packet delivery from a source to a destination. The TCP/IP manager 702 classifies received packets according to appropriate protocols and outputs the classified packets to the service delivery manager 705, the service discovery manager 710, the service control manager 709, and the metadata manager 712.

The service delivery manager 703 controls reception of service data. For example, when controlling real-time streaming data, the service delivery manager 703 may use the Real-time Transport Protocol/Real-time Transport Control Protocol (RTP/RTCP). If real-time streaming data is transmitted over RTP, the service delivery manager 703 parses the received real-time streaming data using RTP and transmits the parsed real-time streaming data to the DEMUX 705 or stores the parsed real-time streaming data in the SI & metadata DB 711 under the control of the service manager 713. In addition, the service delivery manager 703 feeds back network reception information to a server that provides the service using RTCP.

The DEMUX 705 demultiplexes a received packet into audio data, video data and PSI data and transmits the audio data, video data and PSI data to the audio decoder 706, the video decoder 707, and the PSI & (PSIP and/or SI) decoder 704, respectively.

The PSI & (PSIP and/or SI) decoder 704 decodes SI such as PSI. More specifically, the PSI & (PSIP and/or SI) decoder 704 receives and decodes PSI sections, PSIP sections or SI sections demultiplexed by the DEMUX 705.

The PSI & (PSIP and/or SI) decoder 704 constructs an SI DB by decoding the received sections and stores the SI DB in the SI & metadata DB 711.

The audio decoder 706 and the video decoder 707 decode the audio data and the video data received from the DEMUX 705 and output the decoded audio and video data to a user through the display A/V and OSD module 708.

The UI manager 714 and the service manager 713 manage the overall state of the image display device 700, provide UIs, and manage other managers.

The UI manager 714 provides a Graphical User Interface (GUI) in the form of an OSD and performs a reception operation corresponding to a key input received from the user. For example, upon reception of a key input signal regarding channel selection from the user, the UI manager 714 transmits the key input signal to the service manager 713.

The service manager 713 controls managers associated with services, such as the service delivery manager 703, the service discovery manager 710, the service control manager 709, and the metadata manager 712.

The service manager 713 also creates a channel map and selects a channel using the channel map according to the key input signal received from the UI manager 714. The service manager 713 sets the audio/video Packet ID (PID) of the selected channel based on SI of the channel received from the PSI & (PSIP and/or SI) decoder 704 in the demultiplexer 705.

The service discovery manager 710 provides information necessary to select an SP that provides a service. Upon reception of a channel selection signal from the service manager 713, the service discovery manager 710 detects a service based on the channel selection signal.

The service control manager 709 takes charge of selection and control services. For example, if a user selects a live broadcasting service, such as a conventional broadcasting service, the service control manager selects and controls the service using Internet Group Management Protocol (IGMP) or Real-Time Streaming Protocol (RTSP). If the user selects Video on Demand (VoD), the service control manager 709 selects and controls the service using RTSP. RTSP supports trick mode for real-time streaming. Further, the service control manager 709 may initialize and manage a session through an IP Multimedia Control (IMC) gateway using IP Multimedia Subsystem (IMS) and Session Initiation Protocol (SIP). The protocols are only exemplary and thus other protocols are also applicable.

The metadata manager 712 manages metadata related to services and stores the metadata in the SI & metadata DB 711.

The SI & metadata DB 711 stores the SI decoded by the PSI & (PSIP and/or SI) decoder 704, the metadata managed by the metadata manager 712, and the information required to select an SP, received from the service discovery manager 710. The SI & metadata DB 711 may store system setup data.

The SI & metadata DB 711 may be constructed in a Non-Volatile RAM (NVRAM) or a flash memory.

An IMS Gateway (IG) 750 is a gateway equipped with functions needed to access IMS-based IPTV services.

The UI manager 714 of the image display device 700 shown in FIG. 5 serves to control the game application according to the embodiment of the present invention. In particular, the UI manager 714 operates according to a user input signal.

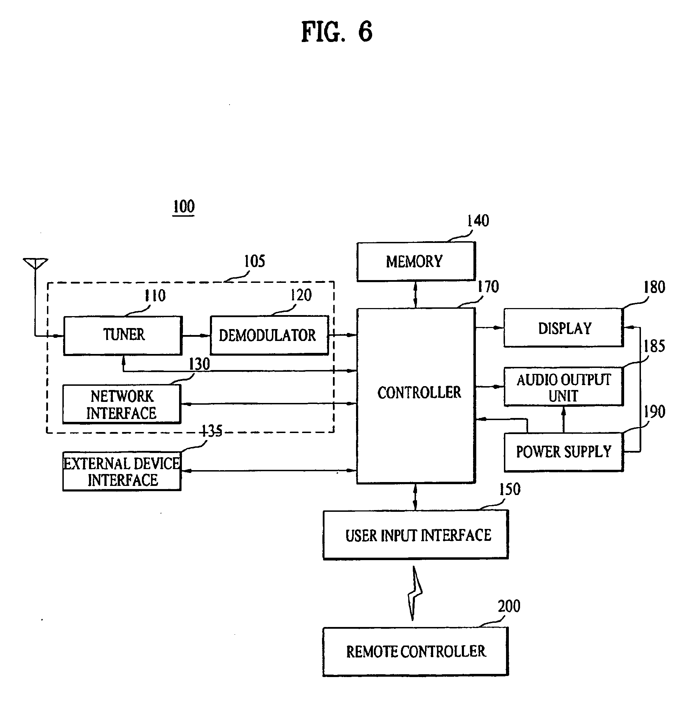

FIG. 6 is a detailed block diagram of the image display device shown in FIG. 1 or 2 according to another embodiment of the present invention.

Referring to FIG. 6, an image display device 100 according to another embodiment of the present invention includes a broadcast receiver 105, an external device interface 135, a memory 140, a user input interface 150, a controller 170, a display 180, an audio output unit 185, a power supply 190, and a camera module (not shown). The broadcast receiver 105 may include a tuner 110, a demodulator 120 and a network interface 130. As needed, the broadcast receiver 105 may be configured so as to include only the tuner 110 and the demodulator 120 or only the network interface 130.

The tuner 110 tunes to a Radio Frequency (RF) broadcast signal corresponding to a channel selected by a user from among a plurality of RF broadcast signals received through an antenna and downconverts the tuned RF broadcast signal into a digital Intermediate Frequency (IF) signal or an analog baseband video or audio signal.

More specifically, if the tuned RF broadcast signal is a digital broadcast signal, the tuner 110 downconverts the tuned RF broadcast signal into a digital IF signal DIF. On the other hand, if the tuned RF broadcast signal is an analog broadcast signal, the tuner 110 downconverts the tuned RF broadcast signal into an analog baseband video or audio signal CVBS/SIF. That is, the tuner 110 may be a hybrid tuner capable of processing not only digital broadcast signals but also analog broadcast signals. The analog baseband video or audio signal CVBS/SIF may be directly input to the controller 170.

The tuner 110 may be capable of receiving RF broadcast signals from an Advanced Television Systems Committee (ATSC) single-carrier system or from a Digital Video Broadcasting (DVB) multi-carrier system.

The tuner 110 may sequentially tune to a number of RF broadcast signals corresponding to all broadcast channels previously stored by a channel storage function from a plurality of RF signals received through the antenna and may downconvert the tuned RF broadcast signals into IF signals or baseband video or audio signals.

The demodulator 120 receives the digital IF signal DIF from the tuner 110 and demodulates the digital IF signal DIF.

For example, if the digital IF signal DIF is an ATSC signal, the demodulator 120 may perform 8-Vestigal SideBand (VSB) demodulation on the digital IF signal DIF. The demodulator 120 may also perform channel decoding. For channel decoding, the demodulator 120 may include a Trellis decoder (not shown), a de-interleaver (not shown) and a Reed-Solomon decoder (not shown) so as to perform Trellis decoding, de-interleaving and Reed-Solomon decoding.

For example, if the digital IF signal DIF is a DVB signal, the demodulator 120 performs Coded Orthogonal Frequency Division Multiple Access (COFDMA) demodulation upon the digital IF signal DIF. The demodulator 120 may also perform channel decoding. For channel decoding, the demodulator 120 may include a convolution decoder (not shown), a de-interleaver (not shown), and a Reed-Solomon decoder (not shown) so as to perform convolution decoding, de-interleaving, and Reed-Solomon decoding.

The demodulator 120 may perform demodulation and channel decoding on the digital IF signal DIF, thereby obtaining a Transport Stream (TS). The TS may be a signal in which a video signal, an audio signal and a data signal are multiplexed. For example, the TS may be an MPEG-2 TS in which an MPEG-2 video signal and a Dolby AC-3 audio signal are multiplexed. An MPEG-2 TS may include a 4-byte header and a 184-byte payload.

In order to properly handle not only ATSC signals but also DVB signals, the demodulator 120 may include an ATSC demodulator and a DVB demodulator.

The TS output from the demodulator 120 may be input to the controller 170 and thus subjected to demultiplexing and A/V signal processing. The processed video and audio signals are output to the display 180 and the audio output unit 185, respectively.

The external device interface 135 may serve as an interface between an external device and the image display device 100. For interfacing, the external device interface 135 may include an A/V Input/Output (I/O) unit (not shown) and/or a wireless communication module (not shown).

The external device interface 135 may be connected to an external device such as a Digital Versatile Disc (DVD) player, a Blu-ray player, a game console, a camera, a camcorder, or a computer (e.g., a laptop computer), wirelessly or by wire. Then, the external device interface 135 externally receives video, audio, and/or data signals from the external device and transmits the received input signals to the controller 170. In addition, the external device interface 135 may output video, audio, and data signals processed by the controller 170 to the external device. In order to receive or transmit audio, video and data signals from or to the external device, the external device interface 135 includes the A/V I/O unit (not shown) and/or the wireless communication module (not shown).

The A/V I/O unit may include a Universal Serial Bus (USB) port, a Composite Video Banking Sync (CVBS) port, a Component port, a Super-video (S-video) (analog) port, a Digital Visual Interface (DVI) port, a High-Definition Multimedia Interface (HDMI) port, a Red-Green-Blue (RGB) port, and a D-sub port, in order to input the video and audio signals of the external device to the image display device 100.

The wireless communication module may perform short-range wireless communication with other electronic devices. For short-range wireless communication, the wireless communication module may use Bluetooth, RadioFrequency IDentification (RFID), Infrared Data Association (IrDA), Ultra WideBand (UWB), ZigBee, and Digital Living Network Alliance (DLNA) communication standards.

The external device interface 135 may be connected to various set-top boxes through at least one of the above-described ports and may thus perform an I/O operation with the various set-top boxes.

The external device interface 135 may receive applications or an application list from an adjacent external device and provide the applications or the application list to the controller 170 or the memory 140.

The network interface 130 serves as an interface between the image display device 100 and a wired/wireless network such as the Internet. The network interface 130 may include an Ethernet port for connection to a wired network. For connection to wireless networks, the network interface 130 may use Wireless Local Area Network (WLAN) (i.e., Wi-Fi), Wireless Broadband (WiBro), World Interoperability for Microwave Access (WiMax), and High Speed Downlink Packet Access (HSDPA).

The network interface 130 may transmit data to or receive data from another user or electronic device over a connected network or another network linked to the connected network. Especially, the network interface 130 may transmit data stored in the image display device 100 to a user or electronic device selected from among users or electronic devices pre-registered with the image display device 100.

The network interface 130 may access a specific Web page over a connected network or another network linked to the connected network. That is, the network interface 130 may access a specific Web page over a network and transmit or receive data to or from a server. Additionally, the network interface 130 may receive content or data from a CP or an NP. Specifically, the network interface 130 may receive content such as movies, advertisements, games, VoD, and broadcast signals, and information related to the content from a CP or an NP. Also, the network interface 130 may receive update information about firmware from the NP and update the firmware. The network interface 130 may transmit data over the Internet or to the CP or the NP.

The network interface 130 may selectively receive a desired application among open applications over a network.

In an embodiment of the present invention, when a game application is executed in the image display device, the network interface 130 may transmit data to or receive data from a user terminal connected to the image display device through a network. In addition, the network interface 130 may transmit specific data to or receive specific data from a server that records game scores.

The memory 140 may store various programs necessary for the controller 170 to process and control signals, and may also store processed video, audio and data signals.

The memory 140 may temporarily store a video, audio and/or data signal received from the external device interface 135 or the network interface 130. The memory 140 may store information about broadcast channels by the channel storage function.

The memory 140 may store applications or a list of applications received from the external device interface 135 or the network interface 130.

The memory 140 may store a variety of platforms which will be described later.

In an embodiment of the present invention, when the image display device provides a game application, the memory 140 may store user-specific information and game play information of a user terminal used as a game controller.

The memory 140 may include, for example, at least one of a flash memory-type storage medium, a hard disk-type storage medium, a multimedia card micro-type storage medium, a card-type memory (e.g. a Secure Digital (SD) or extreme Digital (XD) memory), a Random Access Memory (RAM), or a Read-Only Memory (ROM) such as an Electrically Erasable and Programmable Read Only Memory (EEPROM). The image display device 100 may reproduce content stored in the memory 140 (e.g. video files, still image files, music files, text files, and application files) to the user.

While the memory 140 is shown in FIG. 6 as configured separately from the controller 170, to which the present invention is not limited, the memory 140 may be incorporated into the controller 170, for example.

The user input interface 150 transmits a signal received from the user to the controller 170 or transmits a signal received from the controller 170 to the user.

For example, the user input interface 150 may receive control signals such as a power-on/off signal, a channel selection signal, and a screen setting signal from a remote controller 200 or may transmit a control signal received from the controller 170 to the remote controller 200, according to various communication schemes, for example, RF communication and IR communication.

For example, the user input interface 150 may provide the controller 170 with control signals received from local keys (not shown), such as inputs of a power key, a channel key, and a volume key, and setting values.

Also, the user input interface 150 may transmit a control signal received from a sensor unit (not shown) for sensing a user gesture to the controller 170 or transmit a signal received from the controller 170 to the sensor unit. The sensor unit may include a touch sensor, a voice sensor, a position sensor, a motion sensor, etc.

The controller 170 may demultiplex the TS received from the tuner 110, the demodulator 120, or the external device interface 135 into a number of signals and process the demultiplexed signals into audio and video data.

The video signal processed by the controller 170 may be displayed as an image on the display 180. The video signal processed by the controller 170 may also be transmitted to an external output device through the external device interface 135.

The audio signal processed by the controller 170 may be audibly output through the audio output unit 185. Also, the audio signal processed by the controller 170 may be transmitted to the external output device through the external device interface 135.

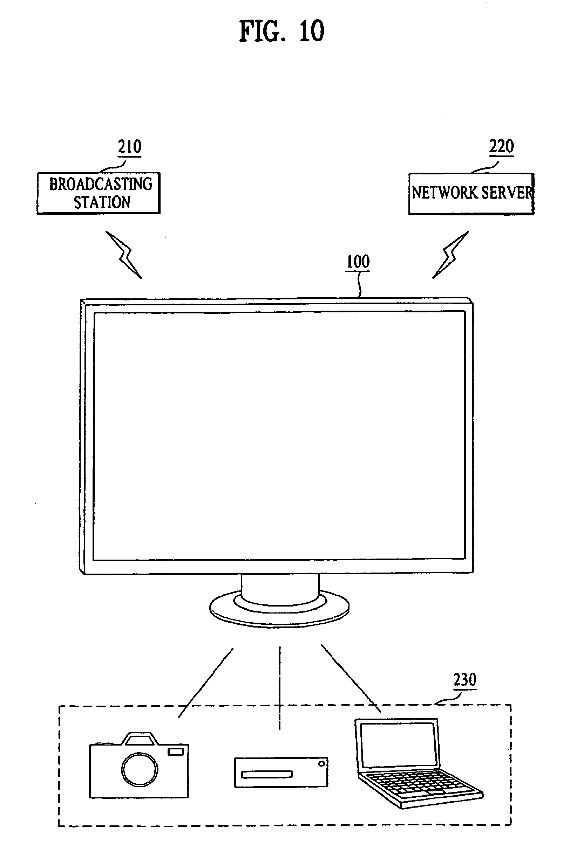

While not shown in FIG. 6, the controller 170 may include a DEMUX and a video processor, which will be described later with reference to FIG. 10.

In addition, the controller 170 may provide overall control to the image display device 100. For example, the controller 170 may control the tuner 110 to tune to an RF broadcast signal corresponding to a user-selected channel or a prestored channel.

The controller 170 may control the image display device 100 according to a user command received through the user input interface 150 or according to an internal program. Especially the controller 170 may access a network and download an application or application list selected by the user to the image display device 100 over the network.

For example, the controller 170 controls the tuner 110 to receive a signal of a channel selected according to a specific channel selection command received through the user input interface 150 and processes a video, audio and/or data signal of the selected channel. The controller 170 outputs the processed video or audio signal along with information about the user-selected channel to the display 180 or the audio output unit 185.

As another example, the controller 170 outputs a video or audio signal received from an external device such as a camera or a camcorder through the external device interface 135 to the display 180 or the audio output unit 185 according to an external device video playback command received through the external device interface 150.

The controller 170 may control the display 180 to display images. For instance, the controller 170 may control the display 180 to display a broadcast image received from the tuner 110, an externally input image received through the external device interface 135, an image received through the network interface 130, or an image stored in the memory 140. The image displayed on the display 180 may be a Two-Dimensional (2D) or Three-Dimensional (3D) still image or moving picture.

The controller 170 may control content playback. The content may include any content stored in the image display device 100, received broadcast content, and externally input content. The content includes at least one of a broadcast image, an externally input image, an audio file, a still image, a Web page, or a text file.

The controller 170 may include a pointer sensor 171, a user interface setting unit (not shown) and a user recognition unit, according to an embodiment of the present invention.

The pointer sensor 171 detects movement and operation of a pointer, which is displayed on the display 180 of the image display device so as to control the image display device, according to a signal input through the user interface 150.

The pointer sensor 171 may detect whether the pointer moves to the outside of the screen of the display 180 according to a pointer movement signal input through the user interface 150 and send the detected signal to the controller 170 so as to perform a specific operation, according to the embodiment of the present invention.

In addition, the pointer sensor 171 may set the outside of an upper side of the display screen to a first region, set the outside of a left side of the display screen to a second region, set the outside of a right side of the display screen to a third region, and set the outside of a lower side of the display screen to a fourth region and detect to which of the first to fourth regions the pointer moves.

Accordingly, the controller 170 may perform an operation corresponding to the region to which the pointer moves, if the pointer sensor 171 detects the movement of the pointer to the outside of the display screen.

In the embodiment, if the pointer moves to the first region located outside of the display screen, the controller 170 may control display of an Internet address window on the display 180, reception of an Internet address in the displayed Internet address window through the user interface 150, reception of data regarding a web page corresponding to the received Internet address through the network interface 130, and display of the data on the display 180.

In another embodiment, if the pointer moves to the second region located outside the display screen, the controller 170 may control display of a bookmark window on the display 180, reception of a selection signal of at least one of shortcut items included in the bookmark window through the user interface 150, reception of data regarding a web page corresponding to the selected shortcut item through the network interface 130, and display of the data on the display 180.

In this case, the controller 170 may search a personal computer connected to the image display device over the network for a bookmark list through the network interface 130, receive a bookmark list, and display the bookmark window based on the received bookmark list on the display 180.

In another embodiment, if the pointer moves to the third region located outside the display screen, the controller 170 may control display of a related-keyword window on the display 180, reception of a selection signal of at least one of related keywords included in the related-keyword window through the user interface 150, and display of a search result page according to the selected related keyword on the display 180.

In this case, the controller 170 may search the broadcast signal received through the tuner 110 for EPG information of content which is currently being utilized in the image display device, generate a related-keyword list corresponding to the searched EPG information, and display the related-keyword window including the generated related-keyword list on the display 180.

In another embodiment, if the pointer moves to the fourth region located outside the display screen, the controller 170 may control display of a simple search window on the display 180, reception of a keyword in the displayed simple search window through the user interface 150, and display of a search result page according to the received keyword on the display 180.

In another embodiment, if the image display device is set to a manipulation mode for performing an operation by detecting movement of the pointer, the controller 170 may control display of a manipulation mode setting notification window according to manipulation mode setting on the display 180.

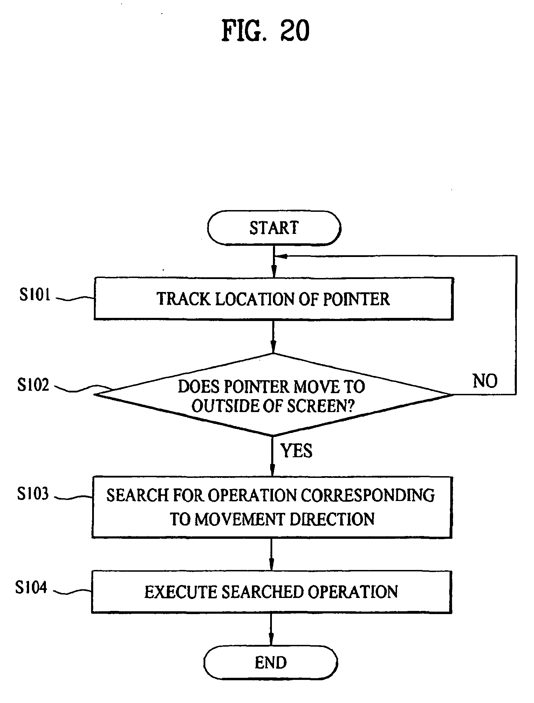

Display screens controlled by the controller 170 according to various embodiments will be described in greater detail with reference to FIGs. 20 to 35.

Although the controller 170 and the pointer sensor 171 divide the outside of the display screen into four regions located outside the display screen and perform at least one of the display of the Internet search window, the display of the simple search window, the display of the related-keyword window and the display of the bookmark window in the above description, the outside of the display screen may be divided into a larger number of regions within a recognizable range of the controller 170 or the pointer sensor 171 of the image display device and various operations executable by the image display device may be mapped to the specific regions to which the pointer moves.

A user interface setting item may be stored. If the user interface setting item is received, the controller 170 may display a first list including execution menu items of available applications and functions of the image display device, display a predetermined region of the display screen as a mapping region of the execution menu items included in the first list, receive a mapping signal for mapping the execution menu items included in the first list to the mapping region, and store a setting item in a user interface.

In addition, the controller 170 may control display of the mapping region including the first region including the upper side of the display, the second region including the left side of the display, the third region including the right side of the display, the fourth region including the lower side of the display on the display 180.

The controller 170 may control reception of a movement signal for moving a specific execution menu item among the execution menu items included in the first list to the mapping region through the pointer and mapping of the specific execution menu item to the mapping region.

The controller 170 may recognize that the pointer moves for mapping to the mapping region, only when the movement speed or acceleration of the pointer is equal to or greater than a predetermined threshold.

In addition, if a user interface setting signal is received during execution of a predetermined application or function, the controller 170 may control display of a first list including the execution menu item of the application or function which is being executed.

The user recognition unit (not shown) may recognize a user who is currently controlling the image display device and the user interface setting unit (not shown) store user interface setting information of each user based on the user recognition result.

The user recognition unit (not shown) may recognize a user who is currently controlling the image display device. The user interface setting unit (not shown) may store user interface setting information of each user based on the user recognition result.

A channel browsing processor may receive the TS output from the demodulator 120 or the TS output from the external device interface 135, extract images of the received TS and generate thumbnail images. The thumbnail images may be directly output to the controller 170 or may be output after being encoded. Also, it is possible to encode the thumbnail images into a stream and output the stream to the controller 170. The controller 170 may display a thumbnail list including a plurality of received thumbnail images on the display 180. The thumbnail images may be updated sequentially or simultaneously. Therefore, the user can readily identify broadcast programs received through a plurality of channels.

The display 180 may convert a processed video signal, a processed data signal, and an OSD signal received from the controller 170 or a video signal and a data signal received from the external device interface 135 into RGB signals, thereby generating driving signals.

The display 180 may be various types of displays such as a Plasma Display Panel (PDP), a Liquid Crystal Display (LCD), an Organic Light-Emitting Diode (OLED) display, a flexible display, and a 3D display.

The display 180 may also be a touchscreen that can be used not only as an output device but also as an input device.

The display 180 may display a pointer which is moved and controlled according to a signal input through the user interface 150, according to the embodiment of the present invention.

The audio output unit 185 may receive a processed audio signal (e.g., a stereo signal, a 3.1-channel signal or a 5.1-channel signal) from the controller 170 and output the received audio signal as sound. The audio output unit 185 may employ various speaker configurations.

To sense a user gesture, the image display device 100 may further include the sensor unit (not shown) that has at least one of a touch sensor, a voice sensor, a position sensor, and a motion sensor, as stated before. A signal sensed by the sensor unit may be output to the controller 170 through the user input interface 150.

The image display device 100 may further include the camera unit (not shown) for capturing images of a user. Image information captured by the camera unit may be input to the controller 170.

The controller 170 may sense a user gesture from an image captured by the camera unit or a signal sensed by the sensor unit, or by combining the captured image and the sensed signal.

The power supply 190 supplies power to the image display device 100.

Particularly, the power supply 190 may supply power to the controller 170 which may be implemented as a System On Chip (SOC), the display 180 for displaying an image, and the audio output unit 185 for audio output.

For supplying power, the power supply 190 may include a rectifier (not shown) for converting Alternating Current (AC) into Direct Current (DC). If the display 180 is configured with, for example, a liquid crystal panel having a plurality of backlight lamps, the power supply 190 may further include an inverter (not shown) capable of performing Pulse Width Modulation (PWM) for luminance change or dimming driving.

The remote controller 200 transmits user input to the user input interface 150. For transmission of user input, the remote controller 200 may use various communication techniques such as Bluetooth, RF communication, IR communication, Ultra Wideband (UWB) and ZigBee.

In addition, the remote controller 200 may receive a video signal, an audio signal or a data signal from the user input interface 150 and output the received signals visually, audibly or as vibrations.

The above-described image display device 100 may be a fixed digital broadcast receiver capable of receiving at least one of ATSC (8-VSB) broadcast programs, DVB-T (COFDM) broadcast programs, and ISDB-T (BST-OFDM) broadcast programs.

The block diagram of the image display device 100 illustrated in FIG. 6 is purely exemplary. Depending upon the specifications of the image display device 100 in actual implementation, the components of the image display device 100 may be combined or omitted or new components may be added. That is, two or more components may be incorporated into one component or one component may be configured as separate components, as needed. In addition, the function of each block is described for the purpose of describing the embodiment of the present invention and thus specific operations or devices should not be construed as limiting the scope and spirit of the present invention.

Unlike the configuration illustrated in FIG. 6, the image display device 100 may be configured so as to receive and play back video content through the network interface 130 or the external device interface 135, without the tuner 100 and the demodulator 120 shown in FIG. 6.

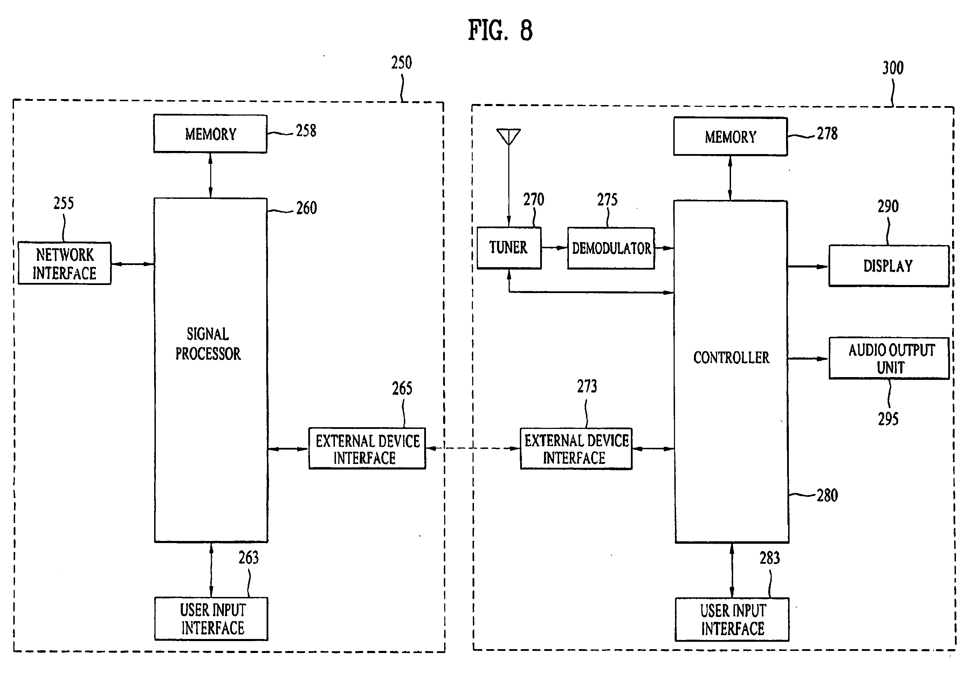

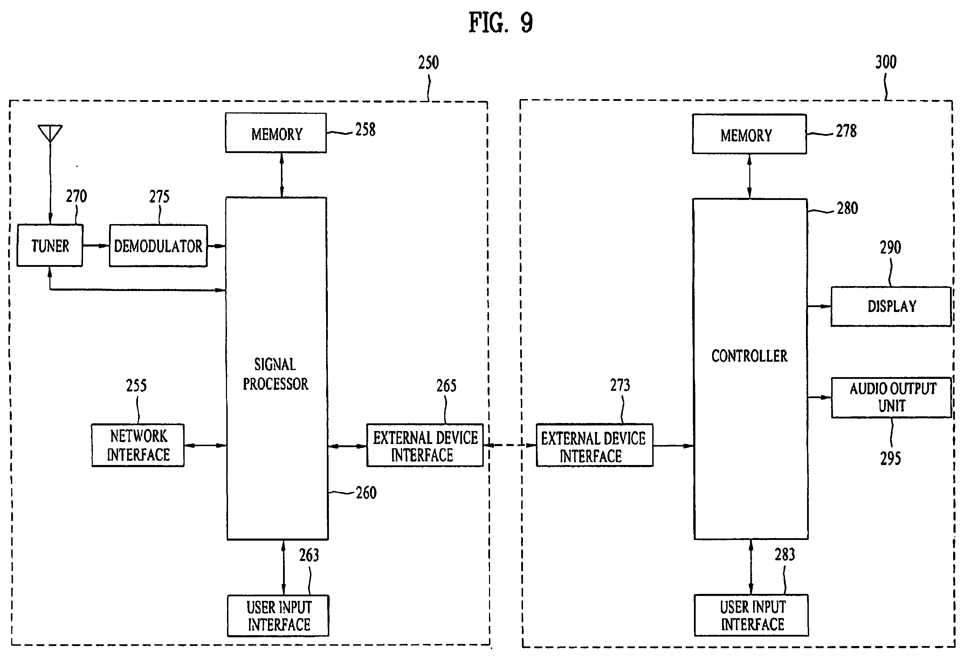

The image display device 100 is an example of an image signal processor for processing an image stored in the device or an input image. Other examples of the image display device include a set-top box, a DVD player, a blu-ray player, a game console, a computer, etc., without the display 180 and the audio output unit 185 shown in FIG. 6. The set-top box will be described below with reference to FIGs. 8 and 9.

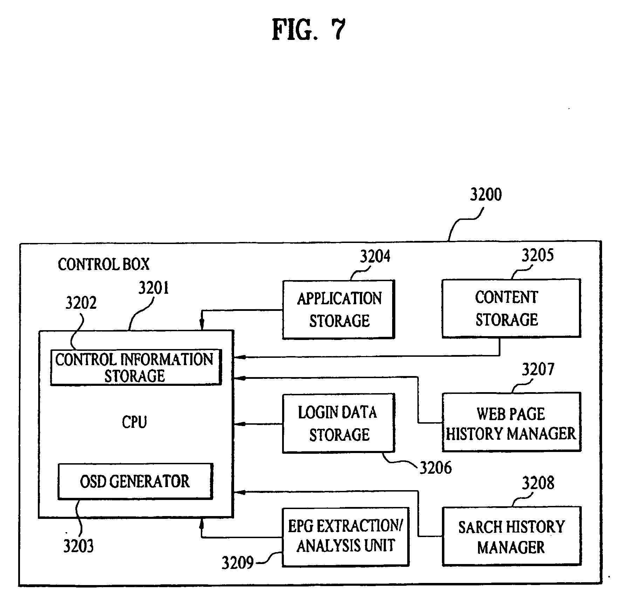

FIG. 7 is a diagram showing a controller 3200 shown in FIG. 6 in greater detail.

In the embodiment, the controller 3200 of the image display device may include a Central Processing Unit (CPU) 3201, a control information storage 3202, an OSD generator 3203, an application storage 3024, a content storage 3205, a login data storage 3206, a web page history manager 3207, a search history manager 3208 and an EPG extraction/analysis unit 3209.

The CPU 3201 controls command analysis, arithmetic operation and comparison performed by the image display device. That is, all operations performed in the image display device may be executed by the arithmetic operation of the CPU 3201.

The control information storage 3202 stores control information through a user interface of the image display device. That is, according to the embodiment of the present invention, if a function or an application of the image display device is mapped to any one of four sides of the display screen of the image display device, the mapping information may be stored in the control information storage 3202. Although the mapping information may be stored in a separate storage region, not in the control information storage 3202 of the controller 3200, the mapping information may be stored in the storage region of the controller 3200 as shown in FIG. 7, in order to rapidly load control information and perform an operation corresponding to user input.

The OSD generator 3203 may generate an OSD signal according to user input or autonomously.

That is, the OSD generator 3203 may generate OSD data of a user interface screen displayed on the display of the image display device. If a pointer is brought into contact with any one of four sides of the display screen, the OSD generator 3203 may generate an OSD screen by displaying a menu screen mapped to the side in a sliding manner. That is, a signal for displaying a variety of information on the display screen as graphics or text may be generated based on a user control signal.

Accordingly, the OSD generator 3203 may transmit the generated OSD data to the CPU 3201 and display the OSD data on the display.

The application storage 3204 may store information regarding an application used by the user in the image display device. That is, if the user uses a specific application through the image display device, execution data of the specific application may be stored in an external memory or a memory included separately from the controller 170 and only metadata of the specific application may be stored in the application storage 3204.

The metadata is also called attribute information and may include information regarding genre, use and rating of the application.

Accordingly, the data stored in the application storage 3204 is transmitted to the CPU 3201 so as to provide information regarding application use frequency or user preferred application to the user.

The content storage 3205 may store information regarding content used by the user in the image display device. That is, if the user uses specific content through the image display device, video and audio data of the specific content may be stored in the external memory or the memory included separately from the controller 170 and only feature information of the specific content may be stored in the content storage 3205.

That is, the content storage 3205 may store playback time, genre and rating information of the specific content used by the user in the image display device. The information stored in the content storage 3205 is transmitted to the CPU 3201 so as to provide information regarding content use frequency and user preference to the user.

The login data storage 3206 may store login information of a user who uses the image display device.

That is, if a predetermined user logs in to a specific web service through the image display device or stores login information through a specific menu item, the login data storage 3206 may store the login information.

The login information may include an ID and a password.

If a user is recognized using a video signal or an audio signal input through the camera unit or the microphone of the image display device, face recognition data of the user included in a user image may be stored as login information and voice feature data included in user voice may be stored as login information.

Accordingly, the login data storage 3206 transmits the stored login information to the CPU 3201 so as to recognize which user currently uses the image display device and automatically perform a login process for a certain application or web service.

If the user browses a web page through the image display device, the web page history manager 3207 may store history web pages the user has visited and when the user visited the web pages. The history may be used in the operation of the image display device.

That is, if a user inputs an Internet address or selects link information in the image display device and a web page is displayed on the display of the image display device, the address of the web page is stored in the web page history manager 3207 and the stored data is updated whenever the web page is browsed in the image display device, thereby identifying web page use frequency.

Then, the above data is transmitted to the CPU 3201 such that the image display device can provide the user with information indicating which web pages the user most has frequently visited or when the web pages were visited.

If a search process is performed in the image display device, the search history manager 3208 may store history indicating search terms.

That is, if a user selects and inputs a keyword and performs a search process in the image display device, the keyword is stored in the search history manager 3208 and the stored data is updated whenever the search process is performed in the image display device, thereby identifying keyword use frequency.

Then, the above data is transmitted to the CPU 3201 such that the image display device provides the user with information regarding the frequently used keyword.

The EPG extraction/analysis unit 3209 may extract and analyze electronic Program Guide (EPG) information included in a broadcast signal received by the image display device. That is, if the broadcast signal is received through the tuner of the image display device and the received broadcast signal is decoded by the decoder, the EPG extraction/analysis unit 3209 extracts a region corresponding to EPG data of the decoded data and analyzes the extracted data. That is, the EPG extraction/analysis unit may analyze whether the extracted data is information regarding a broadcast station, information regarding a broadcast time or information regarding a broadcast genre. In the embodiment of the present invention, a determination as to which information is preferentially required is made through analysis and the extracted information or the analyzed information is transmitted to the CPU 3201 so as to perform a search process required for the image display device through the above information and provide the search result to the user.

The block diagram of the controller 170 shown in FIG. 7 is only exemplary and, as needed, another module may be added and some of the shown modules may be omitted.

FIGS. 8 and 9 are diagrams illustrating any one of the image display devices separately as a set-top box and a display device according to embodiments of the present invention.

Referring to FIG. 8, a set-top box 250 and a display device 300 may transmit or receive data wirelessly or by wire.

The set-top box 250 may include a network interface 255, a memory 258, a signal processor 260, a user input interface 263, and an external device interface 265.

The network interface 255 serves as an interface between the set-top box 250 and a wired/wireless network such as the Internet. The network interface 255 may transmit data to or receive data from another user or another electronic device over a connected network or over another network linked to the connected network.

The memory 258 may store programs necessary for the signal processor 260 to process and control signals and temporarily store a video, audio and/or data signal received from the external device interface 265 or the network interface 255.

The signal processor 260 processes an input signal. For example, the signal processor 260 may demultiplex or decode an input video or audio signal. For signal processing, the signal processor 260 may include a video decoder or an audio decoder. The processed video or audio signal may be transmitted to the display device 300 through the external device interface 265.

The user input interface 263 transmits a signal received from the user to the signal processor 260 or a signal received from the signal processor 260 to the user. For example, the user input interface 263 may receive various control signals such as a power on/off signal, an operation input signal, and a setting input signal through a local key (not shown) or the remote controller 200 and output the control signals to the signal processor 260.

The external device interface 265 serves as an interface between the set-top box 250 and an external device that is connected wirelessly or by wire, particularly the display device 300, for data transmission or reception. The external device interface 265 may also interface with an external device such as a game console, a camera, a camcorder, and a computer (e.g. a laptop computer), for data transmission or reception.

The set-top box 250 may further include a media input unit for media playback. The media input unit may be a Blu-ray input unit (not shown), for example. That is, the set-top box 250 may include a Blu-ray player. After signal processing such as demultiplexing or decoding in the signal processor 260, a media signal from a Blu-ray disc may be transmitted to the display device 300 through the external device interface 265 so as to be displayed on the display device 300.

The display device 300 may include a tuner 270, an external device interface 273, a demodulator 275, a memory 278, a controller 280, a user input interface 283, a display 290, and an audio output unit 295.

The tuner 270, the demodulator 275, the memory 278, the controller 280, the user input interface 283, the display 290 and the audio output unit 295 are identical respectively to the tuner 110, the demodulator 120, the memory 140, the controller 170, the user input interface 150, the display 180, and the audio output unit 185 illustrated in FIG. 6 and thus a description thereof is not provided herein.

The external device interface 273 serves as an interface between the display device 300 and a wireless or wired external device, particularly the set-top box 250, for data transmission or reception.

Hence, a video signal or an audio signal received through the set-top box 250 is output through the display 290 or through the audio output unit 295 under control of the controller 280.

Referring to FIG. 9, the configuration of the set-top box 250 and the display device 300 shown in FIG. 9 is similar to that of the set-top box 250 and the display device 300 shown in FIG. 8, except that the tuner 270 and the demodulator 275 reside in the set-top box 250, not in the display device 300. Thus the following description will focus upon such difference.

The signal processor 260 may process a broadcast signal received through the tuner 270 and the demodulator 275. The user input interface 263 may receive a channel selection input, a channel store input, etc.

FIG. 10 is a diagram illustrating an operation for communicating with third devices in either of the image display devices according to the embodiments of the present invention. The image display device shown in FIG. 10 may be one of the above-described image display devices according to the embodiments of the present invention.

As shown in FIG. 10, the image display device 100 according to the embodiment of the present invention may communicate with a broadcast station 210, a network server 220, or an external device 230.

The image display device 100 may receive a broadcast signal including a video signal from the broadcast station 210. The image display device 100 may process the audio and video signals of the broadcast signal or the data signal of the broadcast signal, suitably for output from the image display device 100. The image display device 100 may output video or audio based on the processed video or audio signal.

Meanwhile, the image display device 100 may communicate with the network server 220. The network server 200 is capable of transmitting signals to and receiving signals from the image display device 100 over a network. For example, the network server 220 may be a portable terminal that can be connected to the image display device 100 through a wired or wireless base station. In addition, the network server 200 may provide content to the image display device 100 over the Internet. A CP may provide content to the image display device 100 through the network server.

The image display device 100 may communicate with the external device 230. The external device 230 can transmit and receive signals directly to and from the image display device 100 wirelessly or by wire. For instance, the external device 230 may be a media storage or a player. That is, the external device 230 may be any of a camera, a DVD player, a Blu-ray player, a PC, etc.

The broadcast station 210, the network server 220 or the external device 230 may transmit a signal including a video signal to the image display device 100. The image display device 100 may display an image based on the video signal included in the received signal. Also, the image display device 100 may transmit a signal transmitted from the network server 220 to the broadcast station 210 to the external device 230 and may transmit a signal transmitted from the external device 230 to the image display device 100 to the broadcast station 210 or the network server 220. That is, the image display device 100 may transmit content included in signals received from the broadcast station 210, the network server 220, and the external device 230 or may immediately play back the content.

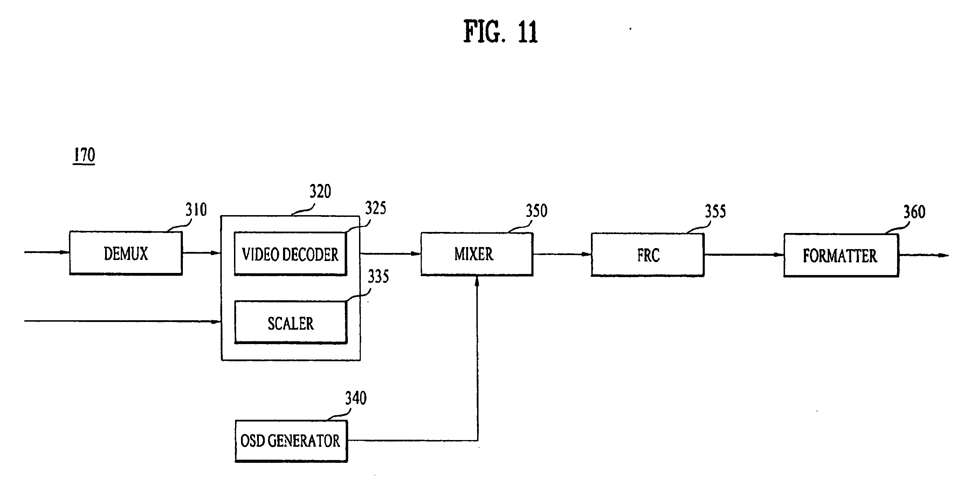

FIG. 11 is a block diagram of the controller shown in FIG. 6. The controller will be described with reference to FIGs. 11 and 6.

The controller 170 may include a DEMUX 310, a video processor 320, an OSD generator 340, a mixer 350, a Frame Rate Converter (FRC) 355, and a formatter 360 according to an embodiment of the present invention. The controller 170 may further include an audio processor (not shown) and a data processor (not shown).

The DEMUX 310 demultiplexes an input stream. For example, the DEMUX 310 may demultiplex an MPEG-2 TS into a video signal, an audio signal, and a data signal. The stream signal input to the DEMUX 310 may be received from the tuner 110, the demodulator 120 or the external device interface 135.

The video processor 320 may process the demultiplexed video signal. For video signal processing, the video processor 320 may include a video decoder 325 and a scaler 335.

The video decoder 325 decodes the demultiplexed video signal and the scaler 335 scales the decoded video signal so that the video signal can be displayed on the display 180.

The video decoder 325 may be provided with decoders that operate based on various standards.

If the demultiplexed video signal is, for example, an MPEG-2 encoded video signal, the video signal may be decoded by an MPEG-2 decoder.

On the other hand, if the video signal is an H.264-encoded DMB or DVB-handheld (DVB-H) signal, the video signal may be decoded by an H.264 decoder.

The video signal decoded by the video processor 320 is provided to the mixer 350.

The OSD generator 340 generates an OSD signal autonomously or according to user input. For example, the OSD generator 340 may generate signals by which a variety of information is displayed as graphics or text on the display 180, based on control signals received from the user input interface 150. The generated OSD signal may include various data such as a UI screen, a variety of menu screens, widgets, icons, etc. of the image display device 100.

For example, the OSD generator 340 may generate a signal by which subtitles are displayed for a broadcast image or Electronic Program Guide (EPG)-based broadcasting information.

The mixer 350 may mix the decoded video signal processed by the image processor 220 with the OSD signal generated by the OSD generator 340 and output the mixed signal to the formatter 360. As the decoded broadcast video signal or the externally input signal is mixed with the OSD signal, an OSD may be overlaid on the broadcast image or the externally input image.

The FRC 355 may change the frame rate of an input image signal. For example, a frame rate of 60Hz is converted into a frame rate of 120 or 240Hz. When the frame rate is to be changed from 60Hz to 120Hz, a first frame is inserted between the first frame and a second frame, or a predicted third frame is inserted between the first and second frames. If the frame rate is to be changed from 60Hz to 240Hz, three identical frames or three predicted frames are inserted between the first and second frames. It is also possible to maintain the frame rate of the input image without frame rate conversion.

The formatter 360 changes the format of the signal received from the FRC 355 to suit the display 180. For example, the formatter 360 may convert a received signal into an RGB data signal. The RGB signal may be output in the form of a Low Voltage Differential Signal (LVDS) or mini-LVDS.

The audio processor (not shown) of the controller 170 may process the demultiplexed audio signal. For audio signal processing, the audio processor (not shown) may have a plurality of decoders.

If the demultiplexed audio signal is a coded audio signal, the audio processor (not shown) of the controller 170 may decode the audio signal. For example, the demultiplexed audio signal may be decoded by an MPEG-2 decoder, an MPEG-4 decoder, an Advanced Audio Coding (AAC) decoder, or an AC-3 decoder.

The audio processor (not shown) of the controller 170 may also adjust the bass, treble or volume of the audio signal.

The data processor (not shown) of the controller 170 may process the demultiplexed data signal. For example, if the demultiplexed data signal is an encoded data signal such as an Electronic Program Guide (EPG) which includes broadcast information specifying the start time, end time, etc. of scheduled broadcast programs of each channel, the controller 170 may decode the data signal. Examples of an EPG include ATSC-Program and System Information Protocol (PSIP) information and DVB-Service Information (SI).

ATSC-PSIP information or DVB-SI may be included in the header of the above-described TS, i.e., a 4-byte header of an MPEG-2 TS.

The block diagram of the controller 170 shown in FIG. 11 is an embodiment of the present invention. Depending upon the specifications of the controller 170, the components of the controller 170 may be combined, or omitted. Or new components may be added to the controller 170.

IG. 12 is a diagram showing an example of a platform architecture for either of the image display devices according to the embodiments of the present invention.

IG. 13 is a diagram showing another example of a platform architecture for either of the image display devices according to the embodiments of the present invention.

A platform for either of the image display devices according to the embodiments of the present invention may have OS-based software to implement the above-described various operations.

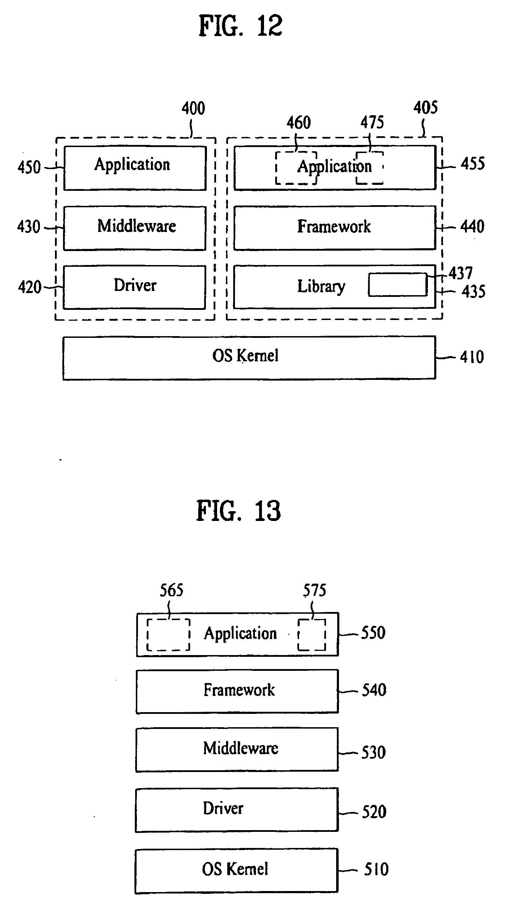

Referring to FIG. 12, a platform for either of the image display devices according to the embodiments of the present invention is of a separate type. The platform may be designed separately as a legacy system platform 400 and a smart system platform 405. An OS kernel 410 may be shared between the legacy system platform 400 and the smart system platform 405.

The legacy system platform 400 may include a stack of a driver 420, middleware 430, and an application layer 450 on the OS kernel 410.

On the other hand, the smart system platform 405 may include a stack of a library 435, a framework 440, and an application layer 455 on the OS kernel 410.

The OS kernel 410 is the core of an operating system. When the image display device is driven, the OS kernel 410 may be responsible for operation of at least one of control of hardware drivers, security protection for hardware and processors in the image display device, efficient management of system resources, memory management, hardware interfacing by hardware abstraction, multi-processing, or scheduling associated with multi-processing. Meanwhile, the OS kernel 410 may further perform power management.

The hardware drivers of the OS kernel 410 may include, for example, at least one of a display driver, a Wi-Fi driver, a Bluetooth driver, a USB driver, an audio driver, a power manager, a binder driver, or a memory driver.

Alternatively or additionally, the hardware drivers of the OS kernel 410 may be drivers for hardware devices within the OS kernel 410. The hardware drivers may include a character device driver, a block device driver, and a network device driver. The block device driver may need a buffer for buffering data on a block basis, because data is transmitted on a block basis. The character device driver may not require a buffer since data is transmitted on a basic data unit basis, that is, on a character basis.

The OS kernel 410 may be implemented based on any of various OSs such as Unix (Linux), Windows, etc. The OS kernel 410 may be a general-purpose open open-source kernel which can be implemented in other electronic devices.

The driver 420 is interposed between the OS kernel 410 and the middleware 430. Along with the middleware 430, the driver 420 drives devices for operation of the application layer 450. For example, the driver 420 may include a driver(s) for a microcomputer, a display module, a Graphics Processing Unit (GPU), an FRC, a General-Purpose Input/Output (GPIO) pin, a High-Definition Multimedia Interface (HDMI), a System Decoder (SDEC) or DEMUX, a Video Decoder (VDEC), an Audio Decoder (ADEC), a Personal Video Recorder (PVR), and/or an Inter-Integrated Circuit (I2C). These drivers operate in conjunction with the hardware drivers of the OS kernel 410.

In addition, the driver 420 may further include a driver for the remote controller 200, especially a pointing device to be described below. The remote controller driver may reside in the OS kernel 410 or the middleware 430, instead of the driver 420.

The middleware 430 resides between the OS kernel 410 and the application layer 450. The middleware 430 may mediate between different hardware devices or different software programs, for data transmission and reception between the hardware devices or the software programs. Therefore, the middleware 430 can provide standard interfaces, support various environments, and enable interaction between tasks conforming to heterogeneous communication protocols.

Examples of the middleware 430 in the legacy system platform 400 may include Multimedia and Hypermedia information coding Experts Group (MHEG) and Advanced Common Application Platform (ACAP) as data broadcasting-related middleware, PSIP or SI middleware as broadcasting information-related middleware, and DLNA middleware as peripheral device communication-related middleware.

The application layer 450 that runs atop the middleware 430 in the legacy system platform 400 may include, for example, UI applications associated with various menus in the image display device 100. The application layer 450 on top of the middleware 430 may allow editing and updating over a network by user selection. Through use of the application layer 450, the user may navigate a desired menu by manipulating the remote controller 210 while viewing a broadcast program.

The application layer 450 in the legacy system platform 400 may further include at least one of a TV guide application, a Bluetooth application, a reservation application, a Digital Video Recorder (DVR) application, and a hotkey application.

In the smart system platform 405, the library 435 is positioned between the OS kernel 410 and the framework 440, forming the basis of the framework 440. For example, the library 435 may include Secure Socket Layer (SSL) (a security-related library), WebKit (a Web engine-related library), c library (libc), and Media Framework (a media-related library) specifying, for example, a video format and an audio format. The library 435 may be written in C or C++. Also, the library 435 may be exposed to a developer through the framework 440.

The library 435 may include a runtime 437 with a core Java library and a Virtual Machine (VM). The runtime 437 and the library 435 form the basis of the framework 440.

The VM may be a virtual machine that enables concurrent execution of a plurality of instances, that is, multi-tasking. For each application of the application layer 455, a VM may be allocated and executed. For scheduling or interconnection between the plurality of instances, the binder driver (not shown) of the OS kernel 410 may operate.

The binder driver and the runtime 437 may connect Java applications to C-based libraries.

The library 435 and the runtime 437 may correspond to the middleware 430 of the legacy system platform.

In the smart system platform 405, the framework 440 includes programs on which applications of the application layer 455 are based. The framework 440 is compatible with any application and may allow component reuse, movement or exchange. The framework 440 may include supporting programs and programs for interconnecting different software components. For example, the framework 440 may include an activity manager related to activities of applications, a notification manager, and a CP for abstracting common information between applications. This framework 440 may be written in Java.

The application layer 455 on top of the framework 440 includes a variety of programs that can be executed and displayed in the image display device 100. The application layer 455 may include, for example, a core application that is a suite providing at least one solution of e-mail, Short Message Service (SMS), calendar, map, or browser functions. The application layer 455 may be written in Java.

In the application layer 455, applications may be categorized into user-undeletable applications 465 stored in the image display device 100 or user-deletable applications 475 that are downloaded from an external device or a network and stored in the image display device.

Using the applications of the application layer 455, a variety of functions such as an Internet telephony service, VoD service, Web album service, Social Networking Service (SNS), Location-Based Service (LBS), map service, Web browsing service, and application search service may be performed through network access. In addition, other functions such as gaming and schedule management may be performed by the applications.

Referring to FIG. 13, a platform for any of the image display devices according to the embodiments of the present invention is of an integrated type. The integrated-type platform may include an OS kernel 510, a driver 520, middleware 530, a framework 540, and an application layer 550.

The integrated-type platform shown in FIG. 13 is different from the separate-type platform shown in FIG. 12 in that the library 435 shown in FIG. 12 is deleted and the application layer 550 is included as an integrated layer. The driver 520 and the framework 540 correspond to the driver 420 and the framework 440 of FIG. 12, respectively.

The library 435 of FIG. 12 may be incorporated into the middleware 530 of FIG. 13. That is, the middleware 530 may include both the legacy system middleware and the image display system middleware. As described before, the legacy system middleware includes MHEG or ACAP as data broadcasting-related middleware, PSIP or SI middleware as broadcasting information-related middleware, and DLNA middleware as peripheral device communication-related middleware, and the image display system middleware includes SSL as a security-related library, WebKit as a Web engine-related library, libc, and Media Framework as a media-related library. The middleware 530 may further include the above-described runtime.

The application layer 550 may include a menu-related application, a TV guide application, a reservation application, etc. as legacy system applications, and email, SMS, a calendar, a map, and a browser as image display system applications.

In the application layer 550, applications may be categorized into user-undeletable applications 565 that are stored in the image display device 100 and user-installable or user-deletable applications 575 that are downloaded from an external device or a network and stored in the image display device.

Based on the plateform shown in FIGs. 12 and 13, various Application Programming Interfaces (API) and Software Development Kins (SDK) necessary to develop an application may be opened. Meanwhile, the APIs may be implemented by calling a function providing a connection to a subroutine for execution within a program.

For example, a source associated with a hardware driver in the OS kernel 410, such as a display driver, a WiFi driver, a Bluetooth driver, a USB driver or an audio driver, may be opened, a source associated with the driver 420 such as a microcomputer, a display module, a graphics processing unit (GPU), a frame rate converter (FRC), an SDEC, a VDEC, a ADEC or a pointing device may be opened, or a source associated with PSIP or SI middleware or DLNA middleware associated with broadcast information may be opened.

Due to various opened APIs, developers can develop applications executed within the image display device 100 or applications for controlling the operation of the image display device 100 based on the platforms shown in FIGs. 11 and 12.

The platforms shown in FIGs. 12 and 13 may be general-purpose ones that can be implemented in many other electronic devices as well as in image display devices. The platforms of FIGs. 12 and 13 may be stored or loaded in the memory 140, the controller 170, or any other processor (not shown) or may be stored or load in the SI & metadata DB 711, the UI manager 714 or the service manager 713 shown in FIG. 6. To execute applications, an additional application processor (not shown) may be further provided.

IG. 14 illustrates a method for controlling either of the image display devices according to the embodiments of the present invention using a remote controller.

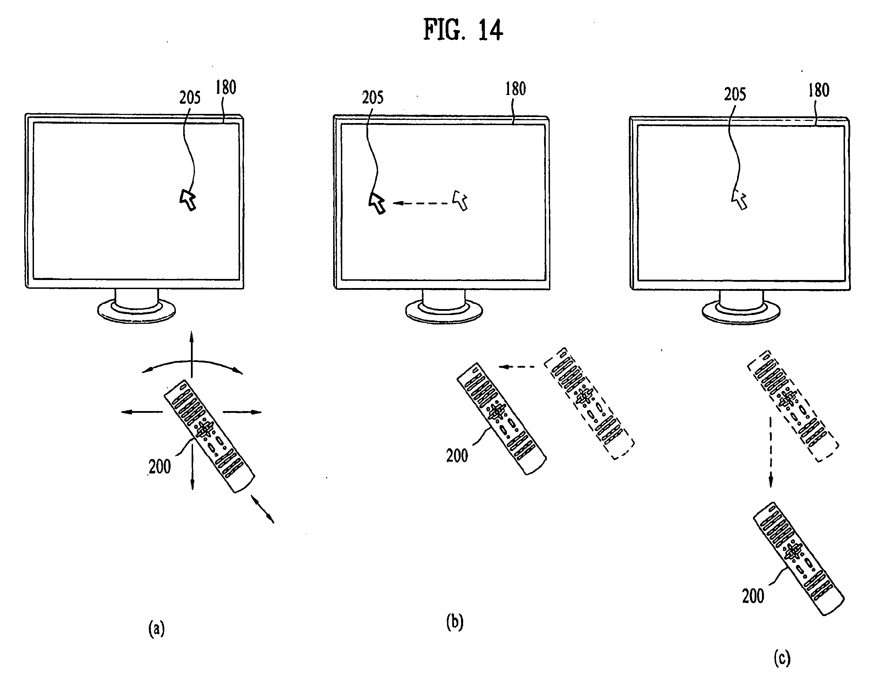

FIG. 14(a) illustrates a pointer 205 representing movement of the remote controller 200 displayed on the display 180.

The user may move or rotate the remote controller 200 up and down, side to side (FIG. 14(b)), and back and forth (FIG. 14(c)). The pointer 205 displayed on the display 180 of the image display device moves according to the movement of the remote controller 200. Since the pointer 205 moves in accordance with the movement of the remote controller 200 in a 3D space as shown in FIG. 14, the remote controller 200 may be referred to as a pointing device.

Referring to FIG. 14(b), if the user moves the remote controller 200 to the left, the pointer 205 moves to the left on the display 180.

sensor of the remote controller 200 detects movement of the remote controller 200 and transmits motion information of the remote controller 200 to the image display device. Then, the image display device calculates the coordinates of the pointer 205 from the motion information of the remote controller 200. The image display device then displays the pointer 205 at the calculated coordinates.

Referring to FIG. 14(c), while pressing a predetermined button of the remote controller 200, the user moves the remote controller 200 away from the display 180. Then, a selected area corresponding to the pointer 205 may be zoomed in on and enlarged on the display 180. On the contrary, if the user moves the remote controller 200 toward the display 180, the selected area corresponding to the pointer 205 is zoomed out and thus contracted on the display 180. On the contrary, when the remote controller 200 moves away from the display 180, the selected area may be zoomed out and when the remote controller 200 approaches the display 180, the selected area may be zoomed in.

With the predetermined button of the remote controller 200 pressed, the up, down, left and right movements of the remote controller 200 may be ignored. That is, when the remote controller 200 moves away from or approaches the display 180, only the back and forth movements of the remote controller 200 are sensed, while the up, down, left and right movements of the remote controller 200 are ignored. Unless the predetermined button is pressed in the remote controller 200, the pointer 205 moves in accordance with the up, down, left or right movement of the remote controller 200.

The movement speed and direction of the pointer 205 may correspond to the movement speed and direction of the remote controller 200.

The pointer of the present specification is an object displayed on the display 180 in correspondence with the movement of the remote controller 200. Therefore, the pointer 205 may have various shapes other than the arrow illustrated in FIG. 14. For example, the pointer 205 may be a dot, a cursor, a prompt, a thick outline, etc. The pointer 205 may be displayed across a plurality of points, such as a line and a surface, as well as at a single point on horizontal and vertical axes.

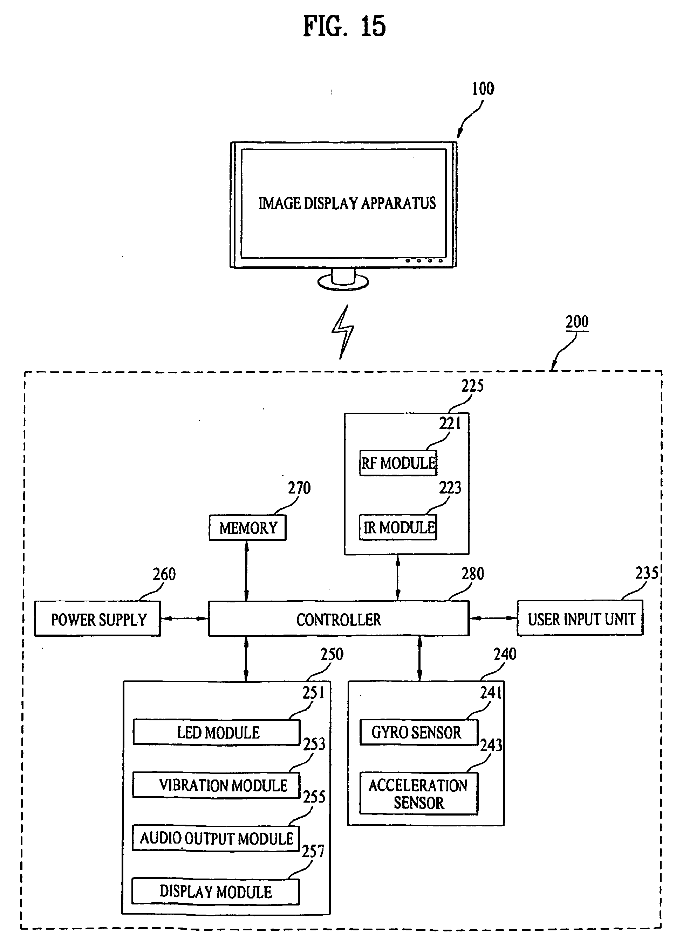

FIG. 15 is a detailed block diagram of the remote controller in either of the image display devices according to an embodiment of the present invention.

Referring to FIG. 15, the remote controller 200 may include a wireless communication module 225, a user input unit 235, a sensor unit 240, an output unit 250, a power supply 260, a memory 270, and a controller 280.

The wireless communication module 225 transmits signals to and/or receives signals from either of the above-described image display devices according to the embodiments of the present invention, that is, the image display device 100.

The remote controller 200 may include an RF module 221 for transmitting RF signals to and/or receiving RF signals from the image display device 100 according to an RF communication standard. The remote controller 200 may also include an IR module 223 for transmitting IR signals to and/or receiving IR signals from the image display device 100 according to an IR communication standard.

In the present embodiment, the remote controller 200 transmits motion information representing movement of the remote controller 200 to the image display device 100 through the RF module 221.

The remote controller 200 may also receive signals from the image display device 100 through the RF module 221. As needed, the remote controller 200 may transmit commands such as a power on/off command, a channel switch command, or a volume change command to the image display device 100 through the IR module 223.

The user input unit 235 may include a keypad, a plurality of buttons, a touchpad and/or a touchscreen. The user may enter commands associated with the image display device 100 to the remote controller 200 by manipulating the user input unit 235. If the user input unit 235 includes a plurality of hard buttons, the user may input various commands associated with the image display device 100 to the remote controller 200 by pressing the hard buttons. Alternatively or additionally, if the user input unit 235 includes a touchscreen displaying a plurality of soft keys, the user may input various commands associated with the image display device 100 to the remote controller 200 by touching the soft keys. The user input unit 235 may also include various input tools other than those set forth herein, such as a scroll key and/or a jog wheel, which should not be construed as limiting the present invention.

The sensor unit 240 may include a gyro sensor 241 and/or an acceleration sensor 243.

The gyro sensor 241 may sense movement of the remote controller 200.

For example, the gyro sensor 241 may sense the movement of the remote controller 200 in X, Y, and Z-axis directions. The acceleration sensor 243 may sense the speed of the remote controller 200. The sensor unit 240 may further include a distance sensor for sensing the distance between the remote controller 200 and the display 180.

The output unit 250 may output a video and/or audio signal corresponding to manipulation of the user input unit 235 or corresponding to a signal received from the image display device 100. The user may easily identify whether the user input unit 235 has been manipulated or whether the image display device 100 has been controlled, based on the video and/or audio signal output by the output unit 250.

The output unit 250 may include a Light Emitting Diode (LED) module 251 which is turned on or off whenever the user input unit 235 is manipulated or whenever a signal is received from or transmitted to the image display device 100 through the wireless communication module 225, a vibration module 253 which generates vibrations, an audio output module 255 which outputs audio data, and/or a display module 257 which outputs video data.

The power supply 260 supplies power to the remote controller 200. If the remote controller 200 remains stationary for a predetermined time or longer, the power supply 260 may, for example, reduce or shut off supply of power to the spatial remote controller 200 in order to save power. The power supply 260 may resume power supply if a predetermined key of the remote controller 200 is manipulated.

The memory 270 may store various types of programs and application data necessary to control or drive the remote controller 200. The remote controller 200 may wirelessly transmit signals to and/or receive signals from the image display device 100 over a predetermined frequency band with the aid of the RF module 221. The controller 280 of the remote controller 200 may store information regarding the frequency band used for the remote controller 200 to wirelessly transmit signals to and/or wirelessly receive signals from the paired image display device 100 in the memory 270, for later use.

The controller 280 provides overall control to the remote controller 200. The controller 280 may transmit a signal corresponding to a key manipulation detected from the user input unit 235 or a signal corresponding to motion of the remote controller 200, as sensed by the sensor unit 240, to the image display device 100.

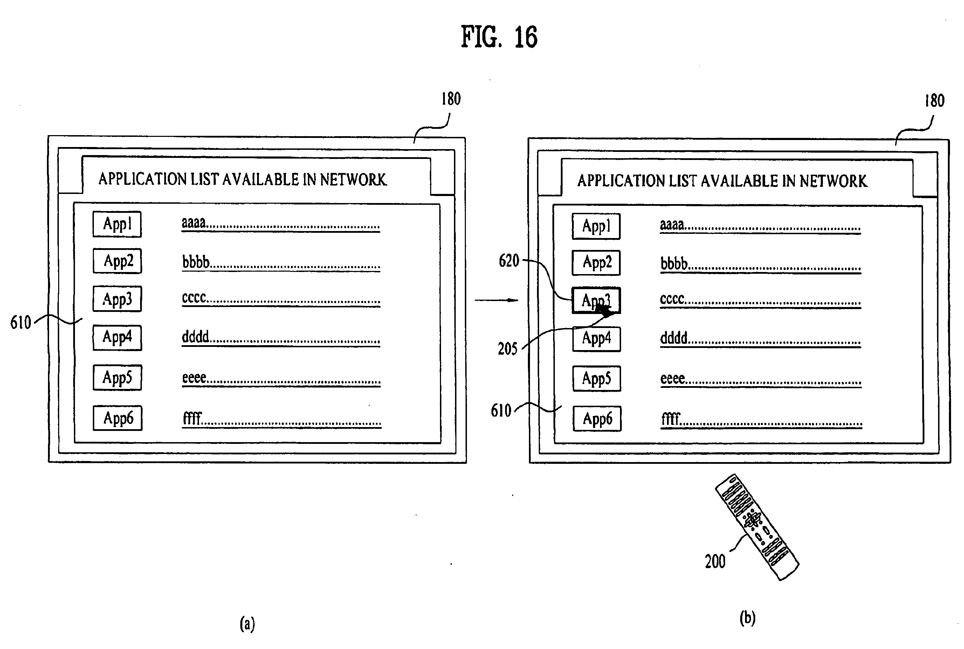

FIG. 16 is a diagram showing a first embodiment of a UI in either of the image display devices according to embodiments of the present invention.

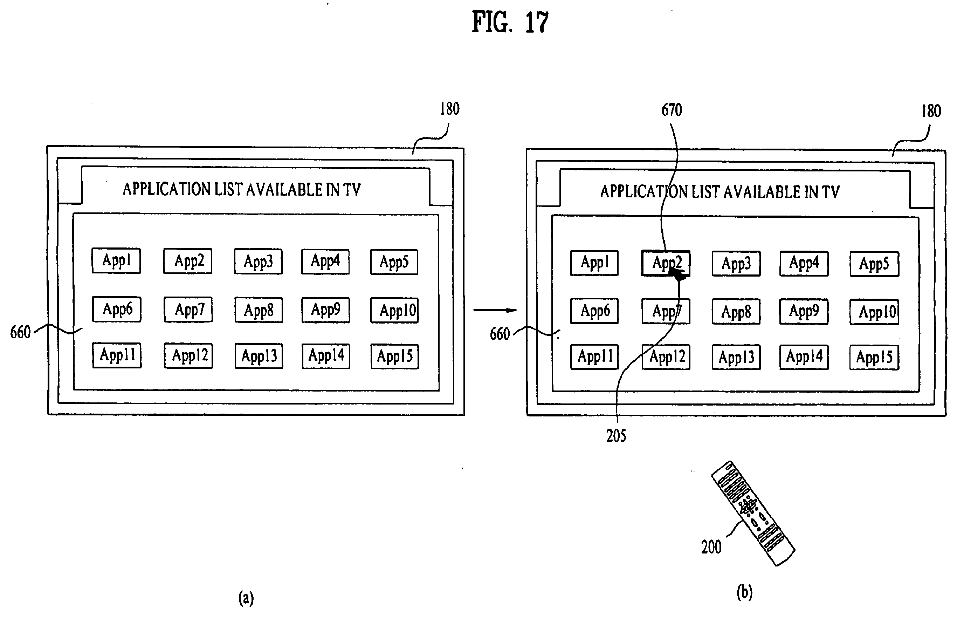

FIG. 17 is a diagram showing a second embodiment of a UI either of the image display devices according to the embodiments of the present invention.

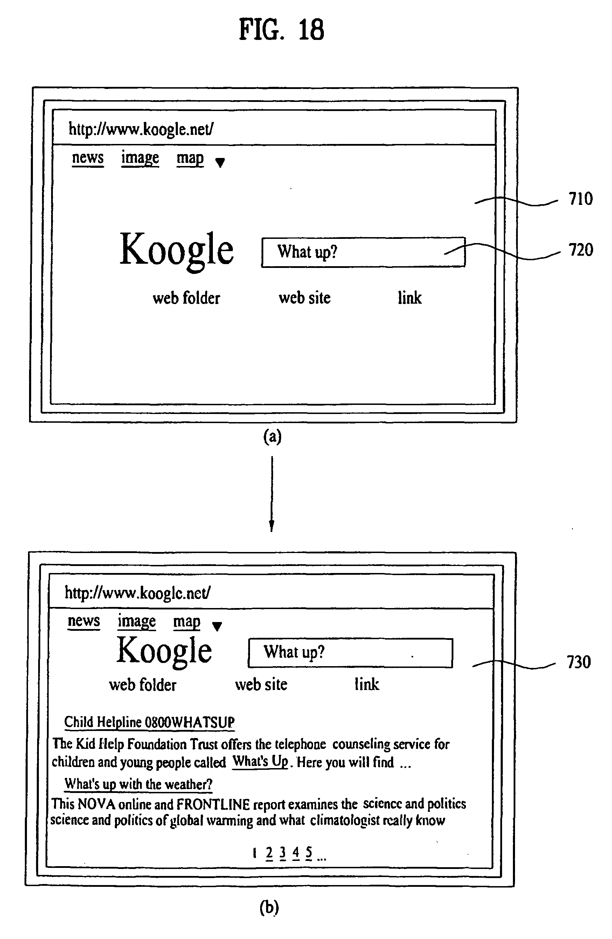

FIG. 18 is a diagram showing a third embodiment of a UI either of the image display devices according to the embodiments of the present invention.

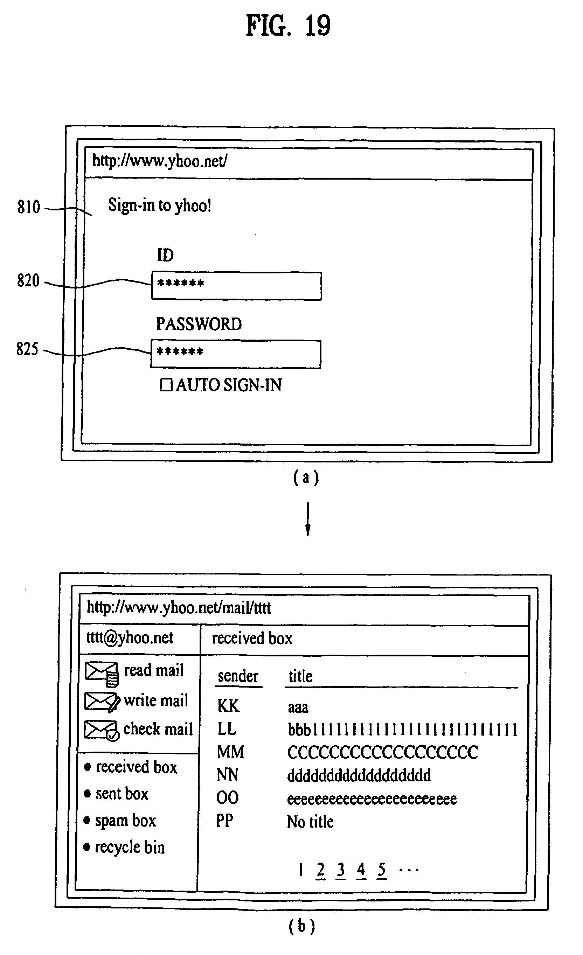

FIG. 19 is a diagram showing a fourth embodiment of a UI either of the image display devices according to the embodiments of the present invention.

FIG. 20 is a block diagram of a user terminal which is available as a game controller according to an embodiment of the present invention.

Referring to FIG. 16, an application list available from a network is displayed on the display 180. A user may directly access a CP or an NP directly, search for various applications, and download the applications from the CP or the NP.

Specifically, FIG. 16(a) illustrates an application list 610 available in a connected server, displayed on the display 180. The application list 610 may include an icon representing each application and a brief description of the application. Because each of the image display devices according to the embodiments of the present invention is capable of full browsing, it may enlarge the icons or descriptions of applications received from the connected server on the display 180. Accordingly, the user can readily identify applications.

FIG. 16(b) illustrates selection of one application 620 from the application list 610 using the pointer 205 of the remote controller 200. Thus, the selected application 620 may be easily downloaded.

FIG. 17 illustrates an application list available in the image display device, displayed on the display 180. Referring to FIG. 17(a), when the user selects an application list view menu by manipulating the remote controller 200, a list of applications 660 stored in the image display device according to each of the embodiments of the present invention is displayed on the display 180. While only icons representing the applications are shown in FIG. 17, the application list 660 may further include brief descriptions of the applications, like the application list 610 illustrated in FIG. 16. Therefore, the user can readily identify the applications.

FIG. 17(b) illustrates selection of one application 670 from the application list 660 using the pointer 205 of the remote controller 200. Thus, the selected application 670 may be easily executed.

While it is shown in FIGS. 16 and 17 that the user selects a desired item by moving the pointer 205 using the remote controller 200, the application may be selected in many other ways. For example, the user may select a specific item using a cursor displayed on the screen by a combined input of an OK key and a direction key of a local key (not shown) or the remote controller 200.

In another example, if the remote controller has a touch pad, the pointer 205 moves on the display 180 according to touch input of the touch pad. Thus the user may select a specific item using the touch-based pointer 205.

FIG. 18 illustrates a Web page displayed on the display of the image display device.

Specifically, FIG. 18(a) illustrates a Web page 710 with a search window 720, displayed on the display 180. The user may enter a character into the search window 720 by use of character keys (not shown) of a keypad displayed on a screen, character keys (not shown) of local keys, or character keys (not shown) of the remote controller 200.

FIG. 18(b) illustrates a search result page 730 having search results matching a keyword entered into the search window, displayed on the display 180. Since the image display devices according to the embodiments of the present invention are capable of fully browsing a Web page, the user can easily read the Web page.

FIG. 19 illustrates another Web page displayed on the display 180.

Specifically, FIG. 19(a) illustrates a mail service page 810 including an ID input window 820 and a password input window 825, displayed on the display 180. The user may enter a specific numeral and/or text into the ID input window 820 and the password input window 825 using a keypad (not shown) displayed on the mail service page, character keys (not shown) of local keys, or character keys (not shown) of the remote controller. Hence, the user can log in to a mail service.

FIG. 19(b) illustrates a mail page 830 displayed on the display 180, after log-in to the mail service. For example, the mail page 830 may contains items "read mail", "write mail", "sent box", "received box", "recycle bin", etc. In the "received box" item, mail may be ordered by sender or by title.

The image display devices according to the embodiments of the present invention are capable of full browsing when displaying a mail service page. Therefore, the user can use the mail service conveniently.

FIG. 20 is a flowchart illustrating a process of performing a predetermined operation in an image display device by movement of a pointer of the image display device according to an embodiment of the present invention.

In the embodiment, the image display device may set outsides of four sides of a display screen of the image display device as specific regions, recognize movement of a pointer as a signal for executing a specific command if the pointer escapes from the display screen and moves to any one of the specific regions, and executes an operation corresponding to the movement of the pointer, in order to perform various operations in the image display device.

Referring to FIG. 20, the image display device tracks the location of the pointer displayed on the image display device (S101).

In the embodiment, an image display device may display a pointer for controlling the image display device on a display of the image display device and receive a movement signal of the pointer through a user interface of the image display device.

The pointer may be displayed in various forms such as an arrow, a finger and a rod. In the present specification, for example, the pointer may be displayed in the form of an arrow.

The image display device may receive the movement signal of the pointer through a variety of means. That is, the image display device may receive the movement signal of the pointer through a User Input Device (UID) including a local key of the image display device and a remote controller. In particular, the remote controller may include a pointing device including a position recognition module.

The pointing device may include a gyro sensor and an acceleration sensor. A user may move the pointer displayed on the image display device simply by moving the pointing device.

In the embodiment, a motion sensing method or an eye tracking method of moving the pointer displayed on the image display device according to movement of a specific body portion or a pupil of a user may be employed.

Next, it is determined whether the detected pointer moves to the outside of the display screen of the image display device (S102).

In one embodiment of the present invention, the image display device may set outsides of four sides of the display screen of the image display device as specific regions and detect whether the pointer of the image display device moves to any one of the specific regions.

That is, for example, if the user continues to input a signal for moving the pointer to the right in a state in which the pointer is located at the center of the display screen, the pointer may escape from the display screen and move to a specific region located on the right side of the display screen. The specific region may not be actually displayed on the image display device.

Accordingly, the image display device may continuously receive the movement signal of the pointer and detect that the pointer moves to the outside of the display screen according to the received movement signal.

In another embodiment, the image display device may set outsides of four sides of the display screen of the image display device as specific regions and detect whether the pointer of the image display device is brought into contact with any one of the four sides of the display screen.

In order to prevent malfunction, in the case where the pointer is moved according to user input and is brought into contact with any one of the four sides of the display screen, the movement speed of the pointer may be detected and the pointer may be determined to be brought into contact with the side only when the movement speed of the pointer is equal to or greater than a predetermined threshold speed.

Next, if the movement of the pointer is detected, the image display device searches for an operation corresponding to the movement direction of the pointer (S103).

In the embodiment, the image display device may set the outside of an upper side of the display screen to a first region, set the outside of a left side of the display screen to a second region, set the outside of a right side of the display screen to a third region, and set the outside of a lower side of the display screen to a fourth region. That is, the outsides of the four sides of the display screen may be set as different regions.

In addition, the image display device detects to which region the pointer moves and executes an operation corresponding to the detected movement direction.

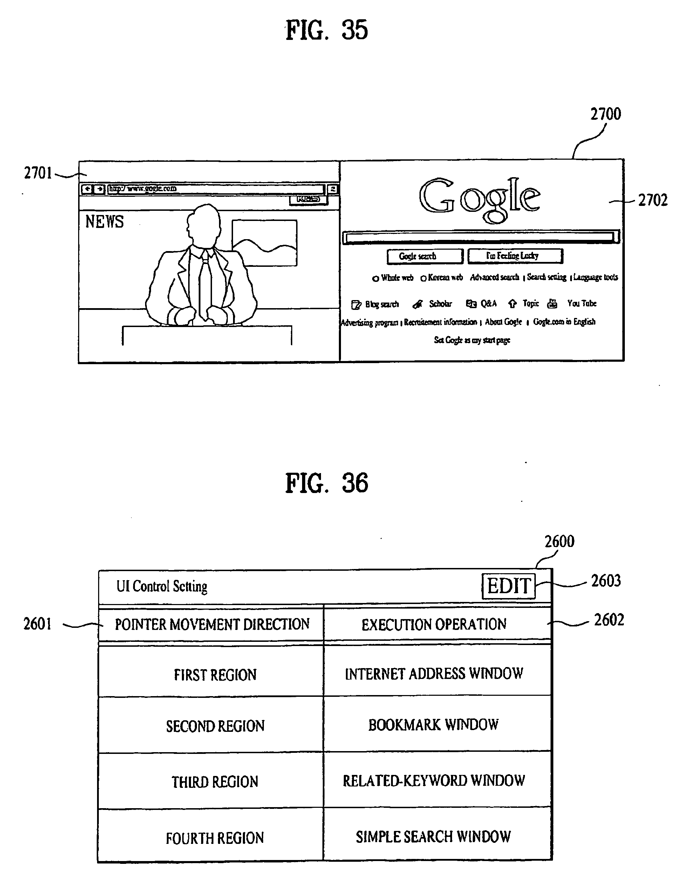

That is, the image display device may store a database including mapping data of specific operations executable in the image display device, which corresponds to the movement regions, in the memory and search for a specific operation to be executed in the image display device through the database if the movement of the pointer to the outside of the display screen is detected. The database will be described in detail below with reference to FIG. 36.

Next, the image display device executes the searched operation (S104).

The operation may include at least one of Internet search window display, simple search window display, related-keyword window display and bookmark window display.

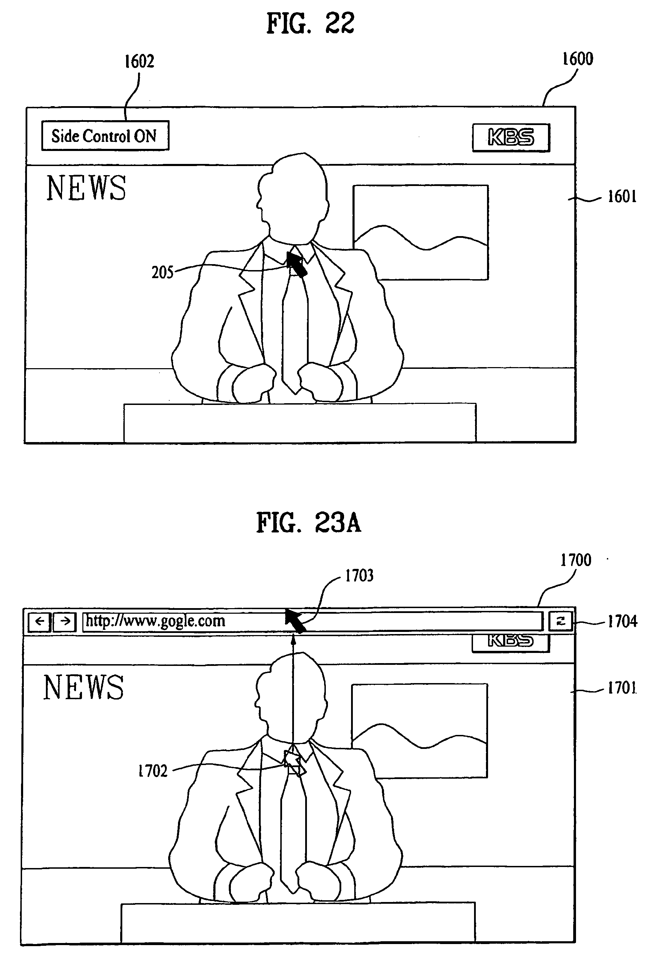

The display screen for executing each operation will be described in detail below with reference to FIGs. 22 to 35.

By performing the above steps, the user may perform a desired operation in the image display device simply by moving the pointer without performing a complicated operation.

Although the outsides or edges of the display screen are divided into specific regions for the upper side, the left side, the right side and the lower side of the display screen and at least one of an Internet search window, a simple search window, a related-keyword window and a bookmark window is displayed in the present specification, the number of specific regions may be increased if the image display device can recognize the specific regions, and various operations executable by the image display device may be mapped to the specific regions to which the pointer moves, in addition to the above-described operations.

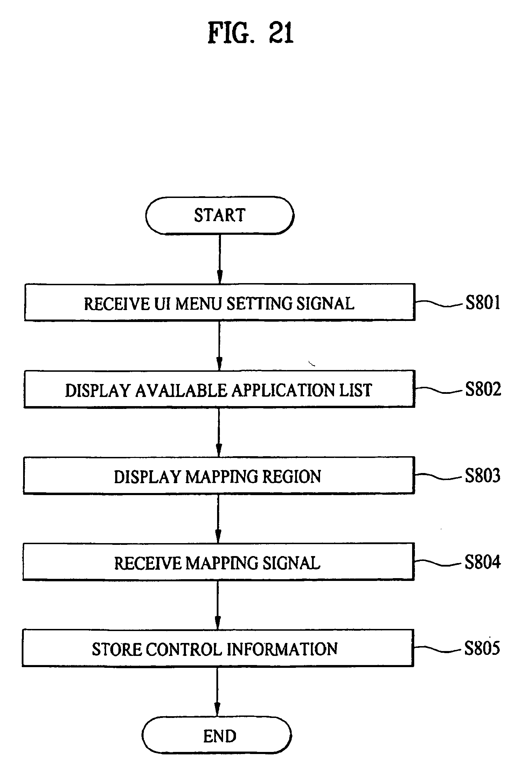

FIG. 21 is a flowchart illustrating a process of setting a user interface according to an embodiment of the present invention.

The image display device may provide a step of setting a user interface, in provision of a user interface using four sides of the display screen according to the embodiment of the present invention.

For example, the image display device receives a user interface setting signal (S801).

In the embodiment, if the image display device receives a specific key input signal or a selection signal of a specific menu item, the image display device may recognize the received signal as the user interface setting signal. If a user initially powers the image display device on or initially logs in to the image display device, the image display device may recognize that the user interface setting signal has been received.

In another embodiment, if a plurality of users uses one image display device, the user interface may be differently set according to the users. Accordingly, when a user interface setting signal is received, the image display device may perform a user recognition process and then perform a process of setting a user interface mapped to the recognized user.

The user recognition process may be performed using various methods such as login using an ID and a password, face recognition and voice recognition.

Next, the image display device may display a list of available applications and a list of executable functions (S802).

In the embodiment, the image display device may display a home board including execution menu items for executing applications and functions of the image display device.

The home board may include all available applications and functions of the image display device. If a user selects a specific theme, the home board may include only execution menu items for applications and functions corresponding to the selected theme. For example, if a user selects a theme "Internet tools", the home board may include only execution menu items for Internet browser, network setting and social network service.

In another embodiment, after performing the user recognition process, the home board may display only execution menu items for functions or applications which are frequently used by the user.

Next, the image display device displays regions mapped to the functions and the applications executed in the image display device (S803).

In the embodiment of the present invention, the image display device may map four sides of the display screen to specific regions for executing the functions and the application of the image display device.

That is, when the user moves the pointer to any one of the four sides of the display screen or brings the pointer into contact with any one side, a menu screen of the function or application mapped to the side may be displayed.

Accordingly, the image display device may display the mapping regions of the four sides of the display screen in different colors.

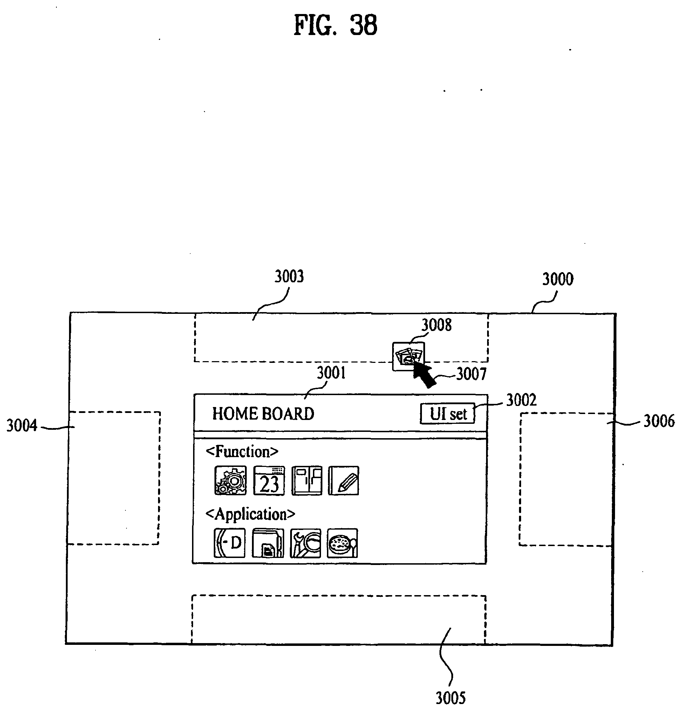

The display screen for displaying the mapping regions will be described in detail below with reference to FIG. 38.

In another embodiment, the image display device may set corners as the mapping regions in addition to the four sides of the display screen.

Next, the image display device receives a mapping signal (S804).

That is, the image display device may receive a mapping signal from the user if the list of functions and applications of the image display device and the mapping regions are displayed.

For example, if the home board is displayed, the user may drag and drop an execution menu item of a function of the image display device or an application located in the home board using the pointer so as to move the execution menu item to a mapping region, thereby mapping the specific application or function to the specific region.

In another embodiment, an application or function may be selected and a specific region to be mapped may be selected, thereby mapping the specific application or function to the specific region.

Next, the image display device stores control information (S805).

That is, the image display device stores the user interface setting information as the control information of the image display device, if the user interface setting process is completed by the above steps.

Accordingly, if the user stores and applies the control information in and to the image display device, the image display device may perform a desired operation simply based upon movement of the pointer.

FIG. 22 is a diagram showing a display screen 1600 including a manipulation mode setting notification window according to an embodiment of the present invention.

In the embodiment, the image display device may display predetermined content 1601 on the display screen and display a pointer 205 for executing a predetermined operation.

That is, the user may move the pointer 205 and select a predetermined menu item or input a specific command so as to control the image display device.

In the embodiment of the present invention, the image display device may be set to a manipulation mode for performing a specific operation of the image display device according to the movement of the pointer.

That is, the user may input a hot-key input signal of a remote controller or a selection signal of a specific menu item to the image display device so as to set the image display device to the above manipulation mode.

The image display device may display a manipulation mode setting notification window 1602 for enabling the user to recognize that the above manipulation mode is set, if the above manipulation mode is set by inputting the above signal.

If the manipulation mode setting notification window 1602 is displayed, the user may perform a desired operation by bringing the pointer 205 to any one of the four sides of the display screen or moving the pointer 205 to the outside of any one side of the display screen.

Alternatively, unlike FIG. 22, the image display device may set a mode for controlling the image display device using the outsides of the four sides of the display screen according to the embodiment of the present invention as a basic control mode and set a desired operation to be performed by the movement of the pointer without special manipulation.

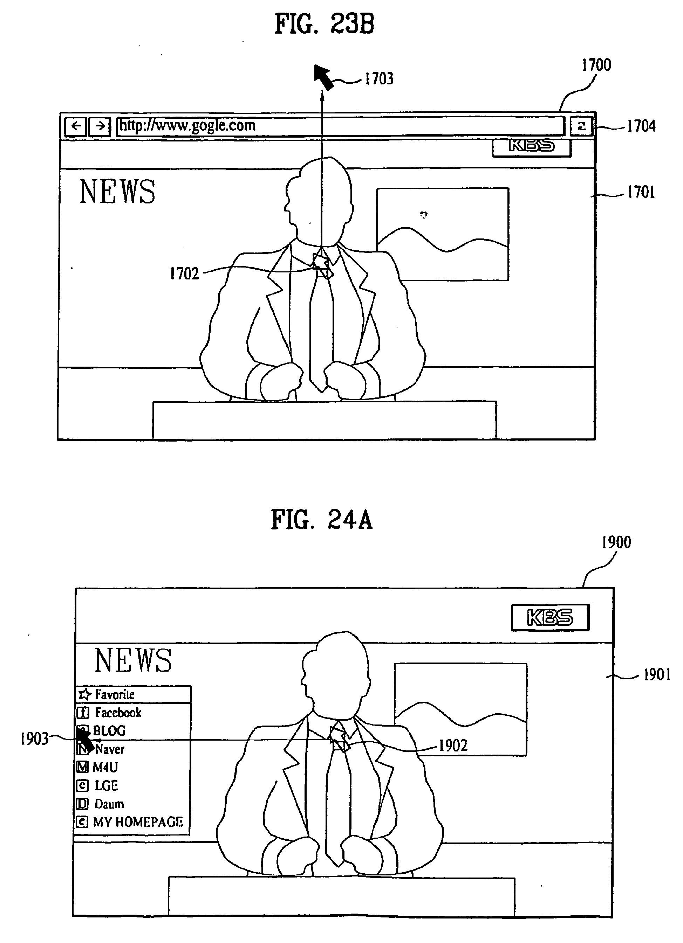

FIG. 23 is a diagram showing a display screen 1700 including an Internet address window according to an embodiment of the present invention.

In the embodiment, the image display device may display an Internet address window 1704 on an upper end of the display screen if the user brings the pointer 1703 into contact with the upper side of the display screen using a predetermined user interface as shown in FIG. 23(a) or moves the pointer 1703 to the outside (first region) of the upper side of the display screen as shown in FIG. 23(b) in a state in which the pointer of the image display device is located at a certain location 1702 on the display screen while the image display device displays predetermined content 1701.

The internet address window 1704 may include a Uniform Resource Locator (URL) input window, a previous page call button, a next page call button, a refresh button, etc.

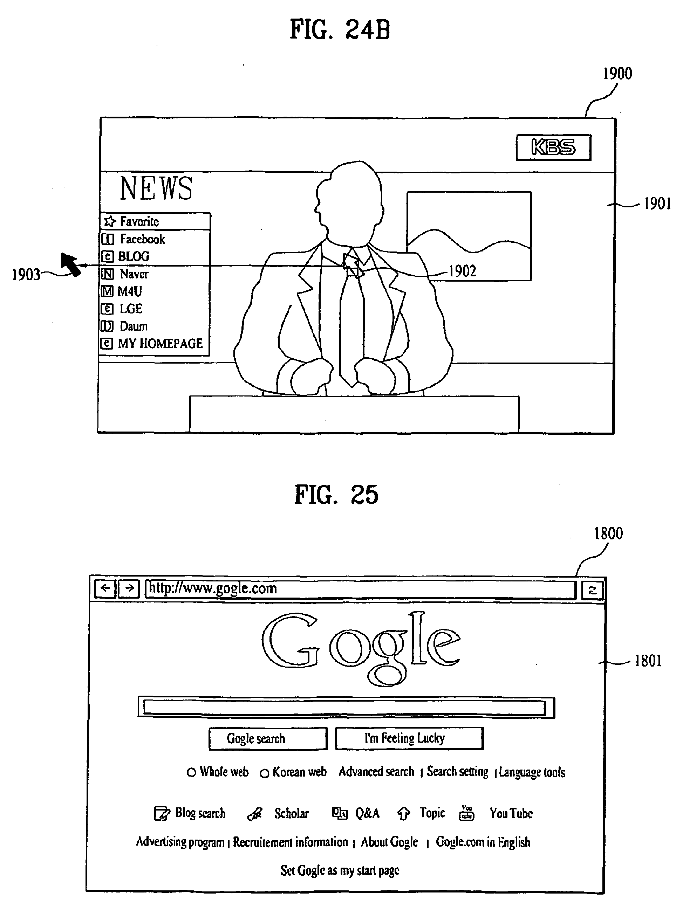

Accordingly, when the user inputs the address of a website to be fetched using the Internet address window 1704, the display screen shown in FIG. 25 may be displayed. That is, the image display device may readily display a desired website.

The Internet address window 1704 may be displayed in a manner of sliding from an upper end of the display screen in correspondence with the movement of the pointer 1703, for visual effects, or in a translucent color in order to prevent the display screen 1701 of the content from being hidden.

FIG. 24 is a diagram showing a display screen 1900 including a bookmark window according to an embodiment of the present invention.

In the embodiment, the image display device may display a bookmark window 1904 on a left side of the display screen if the user brings the pointer 1903 into contact with the left side of the display screen using a predetermined user interface as shown in FIG. 24(a) or moves the pointer 1903 to the outside (second region) of the left side of the display screen as shown in FIG. 24(b) in a state in which the pointer of the image display device is located at a certain location 1902 on the display screen while the image display device displays predetermined content 1901.

The bookmark window 1904 is a list including shortcut items to predetermined websites. The user may select a predetermined shortcut item included in the bookmark window 1904 so as to control the image display device to display a desired website.

In one embodiment, the bookmark items included in the bookmark window 1904 may include bookmark items selected and stored by the user. In another embodiment, a browsing history of the image display device may be retrieved and links to web pages frequently loaded by the user may be included as the bookmark items.

The bookmark items included in the bookmark window 1904 may be sequentially arranged from a bookmark item which is first generated or from a bookmark item corresponding to a web page which the user most frequently visits. Accordingly, the arrangement order of bookmark items may be changed according to the use condition of the image display device.

That is, when the user wishes to use a website included in the bookmark list while utilizing predetermined content in the image display device, the display screen shown in FIG. 24B may be displayed by moving the pointer to the second region 1903 or inputting a selection signal of a predetermined shortcut item 1905 in the displayed bookmark window 1903. That is, the image display device can rapidly display a desired website.

The bookmark window 1903 may be displayed in a manner of sliding from the left side of the display screen in correspondence with the movement of the pointer 1903, for visual effects, or may be displayed in a translucent color in order to prevent the display screen 1901 of the content from being hidden.

FIG. 25 is a diagram showing a display screen 1800 including a web page according to an embodiment of the present invention.

The image display device may display a predetermined website 1801 so as to enable the user to utilize the website using the image display device.

In the embodiment of the present invention, if a predetermined address (http://www.gogle.com) is input to the Internet address window 1704 shown in FIG. 23, the website 1801 corresponding to the input website address (http://www.gogle.com) may be displayed.

In another embodiment of the present invention, if a selection signal of the shortcut item 1905 included in the bookmark window 1904 shown in FIG. 24 is input, the website corresponding to the selected shortcut item may be displayed.

Therefore, the user can load a desired website using the image display device.

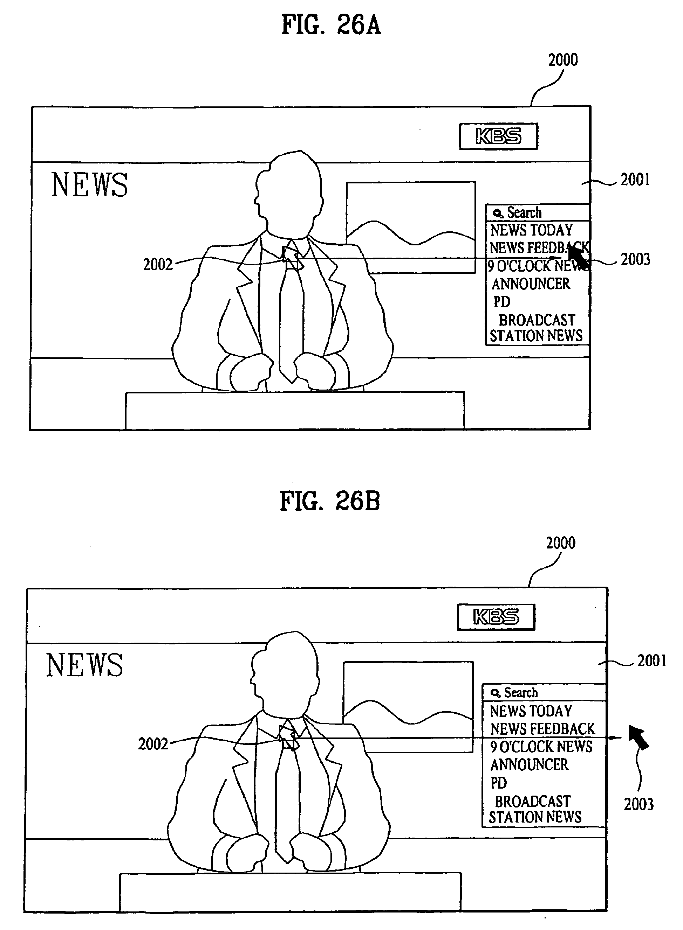

FIG. 26 is a diagram showing a display screen 2000 including a related-keyword window according to an embodiment of the present invention.

In the embodiment, the image display device may display a related-keyword window 2004 on a right side of the display screen if the user brings the pointer 2003 into contact with the right side of the display screen using a predetermined user interface as shown in FIG. 26(a) or moves the pointer 2003 to the outside (third region) of the right side of the display screen as shown in FIG. 26(b) in a state in which the pointer of the image display device is located at a certain location 2002 on the display screen while the image display device displays predetermined content 2001.

The related-keyword window 2004 is a menu including a list of keywords associated with the content 2001 which is currently being displayed on the image display device. The user may select a predetermined keyword included in the related-keyword window 2004 so as to control the image display device to display search results corresponding to the selected keyword.

In the embodiment, if the content 2001 corresponds to broadcast content, the keyword included in the related-keyword window 2004 may include Electronic Program Guide (EPG) text information included in the broadcast signal of the broadcast content and predetermined text corresponding to EPG text information.

The image display device may include a related-keyword generation algorithm or a database for storing data regarding related keywords corresponding to specific text.

That is, referring to FIG. 26, if the content 2001 which is currently being displayed on the image display device is broadcast content of a news program, the image display device may search for EPG text information included in the broadcast signal and identify that the broadcast content which is currently being utilized corresponds to the news program through the EPG text information. Thus, the related-keyword window 2004 including the related keywords associated with the news program, such as "news today", "news feedback", "9 o'clock news", "announcer", "PD", or "broadcast station news" may be displayed.

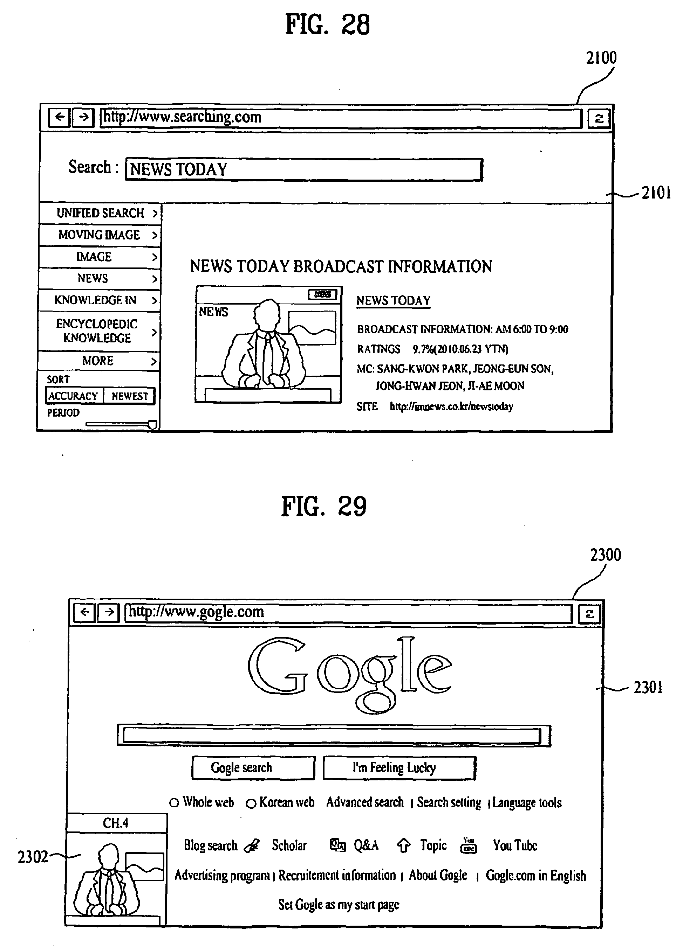

That is, when the user wishes to search for information associated with the content which is currently being utilized while utilizing predetermined content in the image display device, the display screen shown in FIG. 28 may be displayed by moving the pointer to the third region 2003 or inputting a selection signal of a predetermined keyword 2005 in the related-keyword window 2004. That is, the image display device can rapidly display a desired search result.

The related-keyword window 2004 may be displayed in a manner of sliding from the right side of the display screen in correspondence with the movement of the pointer 2003, for visual effects, or may be displayed in a translucent color in order to prevent the display screen 2001 of the content from being hidden.

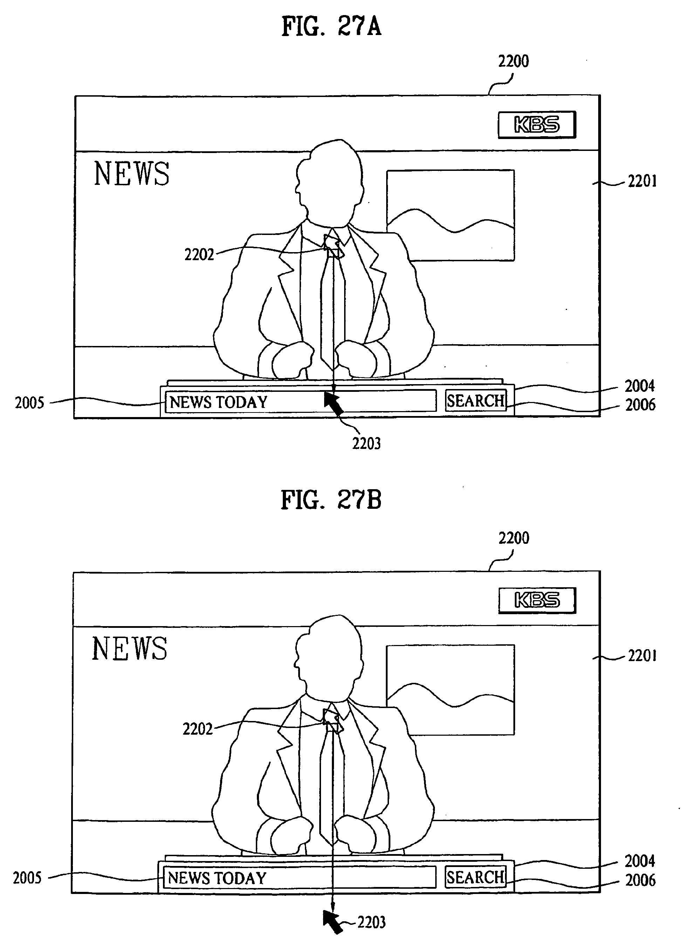

FIG. 27 is a diagram showing a display screen 2200 including a simple search window according to an embodiment of the present invention.

In the embodiment, the image display device may display a simple search window 2204 on a lower side of the display screen if the user brings the pointer 2203 into contact with the lower side of the display screen using a predetermined user interface as shown in FIG. 27(a) or moves the pointer 2203 to the outside (fourth region) of the lower side of the display screen as shown in FIG. 27(b) in a state in which the pointer of the image display device is located at a certain location 2202 on the display screen while the image display device displays predetermined content 2201.

The simple search window 2204 is a menu including a keyword input window 2005 and a search button 2006 and is displayed on the lower side of the display of the image display device such that the display screen of the content which is currently being used in the image display device is prevented from being hidden. The simple search window 2204 enables the user to input a desired keyword.

That is, when the user wishes to input a keyword while utilizing predetermined content in the image display device, the simple search window 2204 may be displayed by moving the pointer. Thus, the user may input a desired keyword.

In addition, if the user completes keyword input to the simple search window 2204 and inputs a selection signal of a search button 2006, the search result screen shown in FIG. 28 may be displayed.

In the embodiment, a program name of content which is currently being utilized may be input to the simple search window 2204 as a basic keyword by searching for supplementary information or EPG information of content which is currently being utilized in the image display device. Accordingly, the user may immediately input the selection signal of the search button 2006 when the user wishes to search for the information using the basic keyword and delete the basic keyword and input a desired keyword when the user wishes to input another keyword.

The simple search window 2204 may be displayed in a manner of sliding from the lower side of the display screen in correspondence with the movement of the pointer 2203, for visual effects, or may be displayed with a translucent color in order to prevent the display screen 2201 of the content from being hidden.

FIG. 28 is a diagram showing a display screen 2100 including a search result page according to an embodiment of the present invention.

In the embodiment, the image display device may display a search result 2100 using an Internet search engine.

That is, if a predetermined related keyword is selected in the related-keyword window shown in FIG. 26 or a keyword is input to the simple search window shown in FIG. 27, the image display device may transmit information regarding the selected keyword or the input keyword to a search engine server, receive a search result from the search engine server, and display a search result page.

The search engine server may be a search engine server corresponding to a search engine which is set during manufacture of the image display device or a search engine server corresponding to a search engine set as a basic search provider according to user setting.

In another embodiment, the image display device may retrieve data stored in the image display device and display a retrieval result.

That is, if a predetermined related keyword is selected in the related-keyword window shown in FIG. 26 or a keyword is input to the simple search window shown in FIG. 27, content corresponding to the selected keyword or the input keyword may be retrieved from the memory of the image display device and a retrieval result page may be displayed.

The content may include content, such as video content, audio content and text content. Content may be stored or content link information may be stored in the image display device.

Accordingly, the user can confirm the content corresponding to the keyword through the retrieval result page and utilize the content.

FIG. 29 is a diagram showing a display screen 2300 including a content playback window and a webpage according to an embodiment of the present invention.

In the embodiment, the image display device may simultaneously display a web page 2301 and a reduced screen 2302 of a display screen of content which is being utilized in the image display device, in the case of displaying the web page shown in FIG. 25.

Accordingly, even when an Internet address is input or a selection signal of a web page shortcut item is input on the display screen of FIG. 23 or 24 while content is being utilized, the user continues to utilize the content through the reduced screen 2302.

The reduced screen 2302 may be displayed in a region in which the web page is not displayed or in a translucent color according to an aspect ratio of the display screen of the image display device, in order to prevent the display screen of the web page 2301 from being hidden.

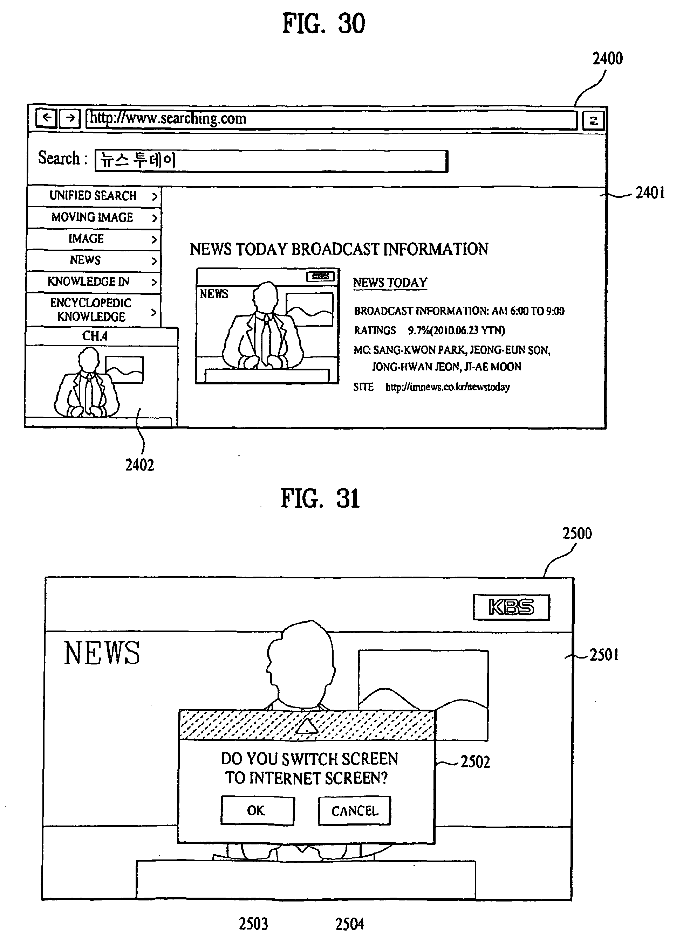

FIG. 30 is a diagram showing a display screen 2400 including a content playback window and a search result page according to an embodiment of the present invention.

In the embodiment, the image display device may simultaneously display a search result page 2401 and a reduced screen 2402 of a display screen of content which is being utilized in the image display device, in the case of displaying the web page shown in FIG. 28.

Accordingly, even when a selection signal of a related keyword is input or a keyword is input on the display screen of FIG. 26 or 27 while content is being utilized, the user continues to utilize the content through the reduced screen 2402.

The reduced screen 2402 may be displayed in a region in which the web page is not displayed or in a translucent color according to an aspect ratio of the display screen of the image display device, in order to prevent the display screen of the web page 2401 from being hidden.

FIG. 31 is a diagram showing a display screen including a screen switch confirmation menu according to an embodiment of the present invention.

In the embodiment, the image display device may display the Internet address window, the bookmark window, the related-keyword window or the simple search window according to movement of the pointer by the user in a state of providing predetermined content 2501 to the user and display a web page or a search result page according to user input.

That is, if the display screen of the image display device is switched to the web page or the search result page, information regarding the content which is being utilized in the image display device may be lost. Thus, the image display device may display a screen switch confirmation menu 2502.

Accordingly, when the screen switch confirmation menu 2502 is displayed, the user may select an OK menu item 2503 so as to switch the screen to the web page or the search result page if information is not lost by screen switch and may select a cancel menu item 2504 so as not to switch the screen if information is lost by screen switch.

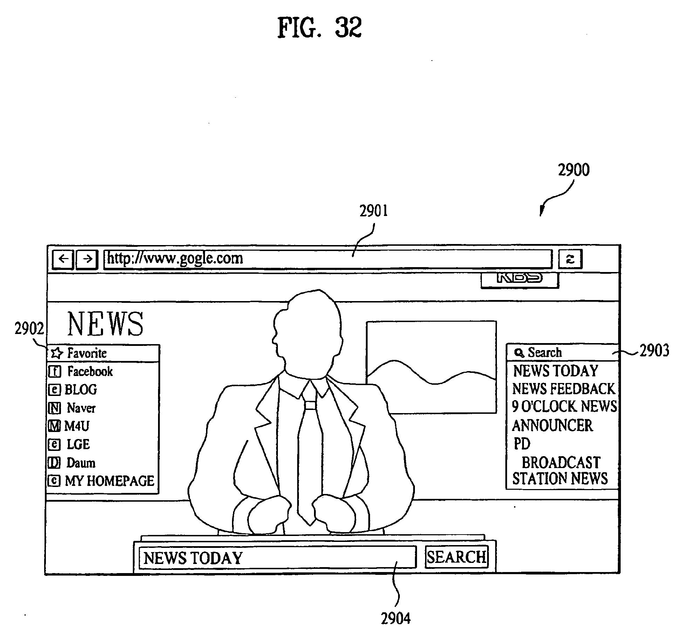

FIG. 32 is a diagram showing a display screen for confirming and utilizing a user interface according to an embodiment of the present invention.

In the embodiment, the image display device may display all the user interfaces corresponding to four sides of the image display device when a specific hot-key input signal or a specific menu item selection signal is input.

That is, referring to FIG. 32, the image display device may simultaneously display the Internet address window 2901, the bookmark window 2902, the simple search window 2903 and the related-keyword window 2904 described with reference to FIGs. 23, 24, 26 and 27.

Therefore, if the user does not remember a relationship between the four sides of the display screen and the menus mapped thereto, the display screen shown in FIG. 32 may be displayed so as to obtain information about the user interfaces.

In addition, the user may execute a desired operation by selecting a desired menu item using the user interfaces shown in FIG. 32.

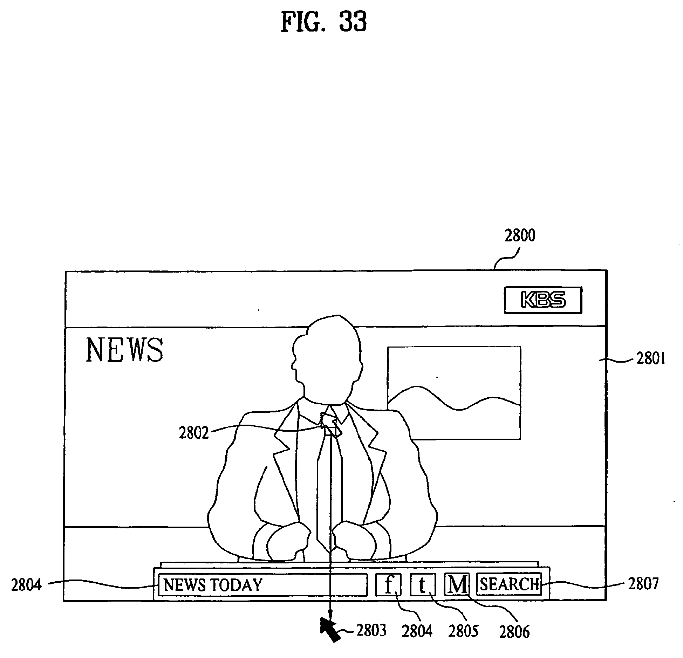

FIG. 33 is a diagram showing a display screen 2800 including a Social Network Service (SNS) utilization menu according to an embodiment of the present invention.

In the embodiment, the image display device displays the simple search window shown in FIG. 27 including a predetermined menu item for utilizing the SNS.

That is, for example, if the user moves the pointer 2802 to the outside 2803 of the lower side of the display screen or brings the pointer 2802 into contact with the lower side of the display screen while utilizing predetermined content 2801 in the image display device, the image display device may display a simple search window 2804 including predetermined menu items 2804, 2805 and 2806 for utilizing the SNS.

Accordingly, the user may perform a search process by inputting a keyword and then selecting a search button 2807 or select any one of the predetermined menu items 2804, 2805 and 2806 for utilizing the SNS so as to share content which is currently being utilized with other users through the SNS.

That is, for example, if the user selects a Facebook sharing menu item 2804, the user may share link information and comment information of the content, which is currently being utilized, with a SNS user through Facebook. The information may be shared through Twitter or another SNS 2806.

The predetermined menu items for utilizing the SNS may be displayed in a state of being included in the simple search window as shown in FIG. 33, may be displayed as a separate menu or may be displayed in a state of being included in the above-described Internet address window, bookmark window or related-keyword window.

That is, the user may retrieve the social network menu item and select the menu item by the movement of the pointer, thereby simply performing a content sharing operation.

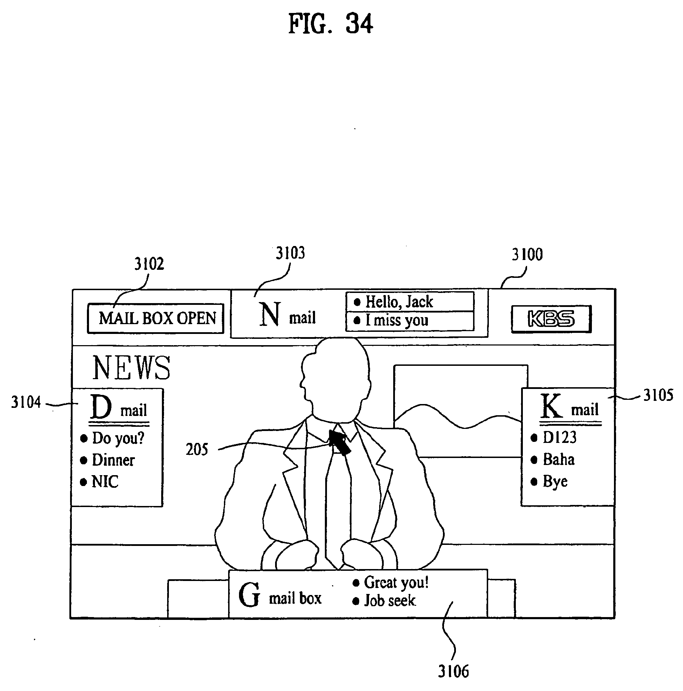

FIG. 34 is a diagram showing a display screen 3100 including an email confirmation menu according to an embodiment of the present invention.

In the embodiment, the image display device may display email lists included in a plurality of email accounts through the user interface according to the present invention.

That is, if the user inputs a hot-key input signal or a selection signal of a menu item for confirming an email, the image display device may set the mode of the display screen to an email conformation mode 3102 and display the email lists of the plurality of email accounts using the four sides of the display screen of the image display device. For example, an email list 3103 of an N mail account may be displayed on the upper side of the display screen, an email list 3104 of a D mail account may be displayed on the left side of the display screen, an email list 3105 of a K mail account may be displayed on the right side of the display screen, and an email list 3106 of a G mail account may be displayed on the lower side of the display screen.

In addition, for login of the plurality of email accounts, the image display device may use previously stored login information. That is, the user may input and store an ID and a password of an email account to be confirmed to and in the image display device.

In one embodiment, if the user moves the pointer 205 to a specific side of the four sides of the display screen, only an email list corresponding to the specific side may be displayed. In another embodiment, if the user inputs a specific key, all the email lists of the plurality of email accounts may be displayed.

That is, since the image display device can enable the user to readily confirm the email lists and display the email lists on the edges of the display screen, the display screen of content which is currently being utilized in the image display device can be prevented from being hidden. Thus, the user can easily utilize the content.

FIG. 35 is a diagram showing a display screen 2700 including an Internet address window and a web page according to an embodiment of the present invention.

In the embodiment, the image display device may bisect the display screen and simultaneously display a content display screen and a web page or a search result page.

That is, referring to FIG. 35, if the aspect ratio of the display screen of the image display device is 16:9, the screen may be bisected, a content playback screen and an Internet address window shown in FIG. 23 may be displayed on the left side of the screen, and a web page corresponding to an URL input to the internet address window may be displayed on the right side of the screen.

Accordingly, the user can utilize content or input an Internet address on the left side of the display screen and confirm the web page on the right side of the display screen.

Although only the Internet address window and the web page are displayed in the FIG. 35, it is apparent to those skilled in the art that the screen may be divided even when the bookmark window, the related-keyword window and the simple search window are displayed.

The image display device and the method for operating the same according to the foregoing exemplary embodiments are not restricted to the exemplary embodiments set forth herein. Therefore, variations and combinations of the exemplary embodiments set forth herein may fall within the scope of the present invention.

FIG. 36 is a diagram showing a user interface database according to an embodiment of the present invention.

In the embodiment, the image display device may be controlled using the outsides of the four sides of the display screen and mapping data of execution operations 2602 corresponding to movement directions 2601 of a pointer may be stored.

Accordingly, the outside of the upper side of the display screen may be set to a first region, the outside of the left side of the display screen may be set to a second region, the outside of the right side of the display screen may be set to a third region, and the outside of the lower side of the display screen may be set to a fourth region. An operation may be mapped to each region.

That is, the user moves a pointer displayed on the image display device to a predetermined region, the image display device may execute the operation mapped to the region to which the pointer moves.

Referring to FIG. 36, the image display device may display an Internet address window if the user moves the pointer displayed on the image display device to the outside of the upper side of the display screen, display a bookmark window if the user moves the pointer to the left side, display a related-keyword window if the user moves the pointer to the right side, and display a simple search window if the user moves the pointer to the lower side.

The image display device may display the database so as to enable the user to confirm an operation mapped to a movement direction. An edit button 2603 may be further included. In this case, when the user inputs a selection signal of the edit button 2603, the mapping data may be edited.

That is, the operations mapped to the directions may be changed according to user setting.

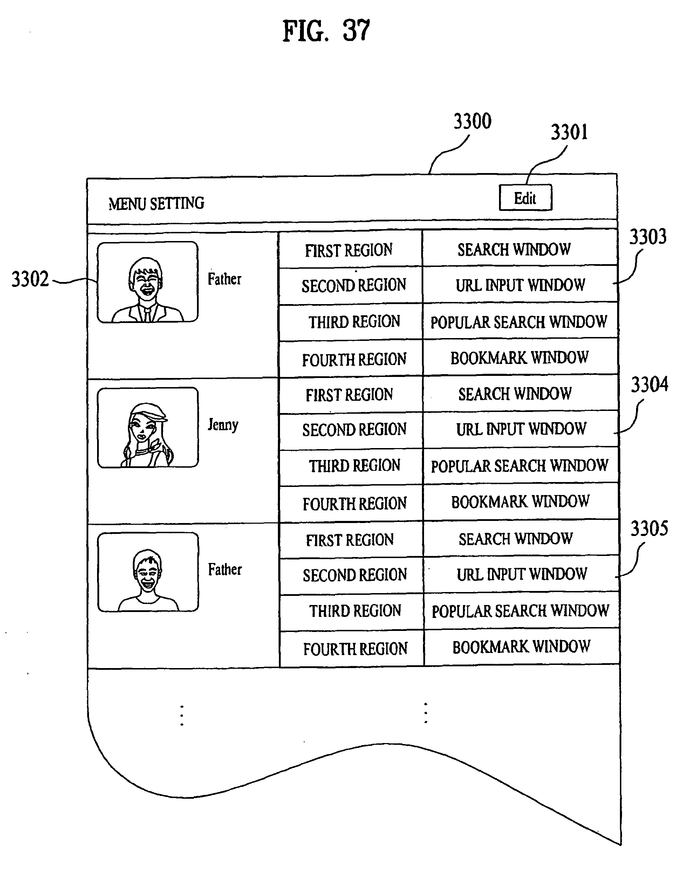

FIG. 37 is a diagram showing a user interface database according to another embodiment of the present invention.

Unlike FIG. 36, if a plurality of users uses one image display device, the image display device may provide different user interfaces to the users. That is, it is possible to respectively provide the users with user interfaces having different configurations and mapping information.

Accordingly, in the database 3300 shown in FIG. 37, if a plurality of users (father, Jenny, Sig) uses the image display device, the database 3300 may include image information 3302 and ID information of each user and mapping data 3303, 3304 and 3305 mapped to the users.

That is, if it is recognized which user of a plurality of users who may utilize the image display device is currently utilizing the image display device or if a plurality of users simultaneously utilizes the image display device, it is possible to recognize which user has control rights and to provide a user interface according to mapping data of the recognized user.

Examples of the recognition method may include various methods such as a method of receiving an ID from a user and logging in to the image display device, a method of recognizing a user based on a user image obtained through a camera unit included in the image display device, a method of recognizing a user based on user voice obtained through a microphone included in the image display device.

The image display device may display the database 3300 and to provide the user with information regarding a user interface setting item.

If the user wishes to edit the mapping data, the user may input a selection signal of an edit button 3301.

FIG. 38 is a diagram showing a display screen 3000 including a user interface setting menu according to an embodiment of the present invention.

In the embodiment, the image display device may set a user interface according to the present invention simply by dragging and dropping an execution menu item (execution icon) to an edge of the display screen of the image display device.

That is, for example, if a specific hot-key input signal for setting a user interface is input or a selection signal of a user interface setting menu item 3002 is input, the image display device may display a home board 3001 including execution menu items of applications and functions executable by the image display device and user interface settable regions 3003, 3004, 3005 and 3006.

Accordingly, the user may drag an execution menu item 3008 among the execution menu items included in the home board 3001 using a pointer 3007 and drops the execution menu item 3008 in any one region 3003 of the user interface settable regions, thereby performing a user interface setting operation. In another embodiment, a user interface setting operation may be performed only by bringing the dragged execution menu item 3008 into contact with a specific edge of the display screen.

That is, in the case where the user interface setting operation shown in FIG. 38 is performed, the image display device display a menu corresponding to the execution menu item 3008 on an upper end 3003 of the display if the user brings the pointer 3007 into contact with the upper end 3003 of the display or locates the pointer on the upper end 300 for a predetermined time or longer.

Accordingly, the user can intuitively set the user interface through a simple drag-and-drop operation.

The method for operating an image display device according to the foregoing exemplary embodiments may be implemented as code that can be written on a computer-readable recording medium and thus read by a processor. The computer-readable recording medium may be any type of recording device in which data is stored in a computer-readable manner. Examples of the computer-readable recording medium include a ROM, a RAM, a CD-ROM, a magnetic tape, a floppy disc, an optical data storage, and a carrier wave (e.g., data transmission over the Internet). The computer-readable recording medium can be distributed over a plurality of computer systems connected to a network so that computer-readable code is written thereto and executed therefrom in a decentralized manner. Programs, code, and code segments to realize the embodiments herein can be construed by one of ordinary skill in the art.

While the present invention has been particularly shown and described with reference to exemplary embodiments thereof, it will be understood by those of ordinary skill in the art that various changes in form and details may be made therein without departing from the spirit and scope of the present invention as defined by the following claims.

According to an embodiment of the present invention, since a user can select various menus simply by moving a pointer, it is possible to easily and conveniently perform a desired operation of the image display device.

According to another embodiment of the present invention, since various user interfaces can be provided in an image display device, it is possible to increase user convenience.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

## Claims

1. A method of setting a user interfaceUI, of an image display device, the method comprising:
receiving a UI setting signal;
displaying a board including execution menu items of available applications and functions of the image display device and one or more predetermined regions on a display screen as a mapping region of the execution menu items included in the board;
receiving a mapping signal for mapping the execution menu items included in the board to the one or more predetermined region;
storing UI setting information based on the received mapping signal for a plurality of users, respectively; and
displaying a content and a pointer for controlling the image display device on the display screen;
**characterized by**
if the pointer is contacted to the one or more predetermined region of the display screen, displaying a corresponding predetermined region on the display screen based on both a recognized user who is currently controlling the image display device and a location of the pointer,
wherein the execution menu items included in the board are configured differently according to any one of a theme selected by the recognized user and a frequency with which the execution menu items were previously used by the user.

2. The method according to claim 1, wherein the displaying of the predetermined region of the display screen as the mapping region of the execution menu items included in the board includes displaying the mapping region including a first region including an upper side of the display screen, a second region including a left side of the display screen, a third region including a right side of the display screen and a fourth region including a lower side of the display screen.

3. The method according to claim 2, further comprising:
detecting the location of the pointer; and
executing a function or application included in an execution menu item mapped to the side, to which the pointer moves.

4. The method according to claim 3, wherein the executing of the function or the application includes scrolling and displaying an execution screen of the function or application from the side, to which the pointer moves.

5. The method according to claim 1, wherein the receiving of the mapping signal includes:
moving a specific execution menu item among the execution menu items included in the board to the mapping region through the pointer; and
mapping the specific execution menu item to the mapping region.

6. The method according to claim 5, wherein the moving the specific execution menu item includes recognizing that the specific execution menu item moves for mapping to the mapping region

7. The method of according to claim 1, wherein the UI setting information, which is previously set, is capable of editing by dragging and dropping the execution menu items to the predetermined region, wherein the UI is displayed if a movement speed or acceleration of the pointer is equal to or greater than a threshold speed, and wherein the pointer is moved by a motion sensing method and/or a eye tracking method.

8. The method according to claim 2, wherein the storing of the UI setting information includes mapping user accounts of different email services to the first to fourth regions, if the execution menu item is an email service.

9. An image display device for setting a user interface, UI, comprising:
a display configured to display content received by the image display device and a pointer for controlling the image display device;
a user interface configured to receive a movement signal and a control signal of the pointer;
a UI setting unit configured to store a UI setting matter; and
a controller configured to control to display a board including execution menu items of available applications and function of the image display device, display one or more predetermined region of a display screen as a mapping region of the execution menu items included in the board, receive a mapping signal for mapping the execution menu items included in the board to the mapping region, if a UI setting signal is received, and store UI setting information based on the received mapping signal for a plurality of users, respectively,
**characterized in that** the controller is further configured to control to display a corresponding predetermined region on the display screen based on both a recognized user who is currently controlling the image display device and a location of the pointer, if the pointer is contacted to the one or more predetermined region of the display screen,
wherein the controller is further configured to:
configure differently the execution menu items included in the board according to any one of a theme selected by the recognized user and a frequency with which the execution menu items were previously used by the user.

10. The image display device according to claim 9, wherein the display displays the mapping region including a first region including an upper side of the display screen, a second region including a left side of the display screen, a third region including a right side of the display screen and a fourth region including a lower side of the display screen.

11. The image display device according to claim 10, wherein the controller detects the location of the pointer, and executes a function or application included in an execution menu item mapped to the side, to which the pointer moves.

12. The image display device according to claim 11, wherein the controller scrolls and displays an execution screen of the function or application from the side, to which the pointer moves.

13. The image display device according to claim 9, wherein the controller receives a movement signal for moving a specific execution menu item among the execution menu items included in the board to the mapping region through the pointer, and maps the specific execution menu item to the mapping region.

14. The image display device according to claim 9, wherein the controller recognizes that the specific execution menu item moves for mapping to the mapping region, and wherein the UI setting information, which is previously set, is capable of editing by dragging and dropping the execution menu items to the predetermined region, wherein the UI is displayed if a movement speed or acceleration of the pointer is equal to or greater than a threshold speed, and wherein the pointer is moved by a motion sensing method and/or a eye tracking method.

## Patentansprüche

1. Verfahren zum Einstellen einer Benutzerschnittstelle (user interface, UI) einer Bildanzeigeeinrichtung, wobei das Verfahren umfasst:
Empfangen eines UI-Einstellsignals;
Anzeigen einer Tafel, die Ausführungsmenüelemente von verfügbaren Anwendungen und Funktionen der Bildanzeigeeinrichtung enthält, und einer oder mehrerer vorgegebener Regionen auf einem Bildschirm als eine Zuordnungsregion der in der Tafel enthaltenen Ausführungsmenüelemente;
Empfangen eines Zuordnungssignals zum Zuordnen der in der Tafel enthaltenen Ausführungsmenüelemente zu der einen oder den mehreren vorgegebenen Regionen;
Speichern von UI-Einstellungsinformationen basierend auf dem empfangenen Zuordnungssignal jeweils für eine Vielzahl von Benutzern; und
Anzeigen eines Inhalts und eines Zeigers zur Steuerung der Bildanzeigeeinrichtung auf dem Bildschirm;
**dadurch gekennzeichnet, dass**
wenn der Zeiger mit der einen oder den mehreren vorgegebenen Regionen des Bildschirms in Kontakt gebracht wird, Anzeigen einer entsprechenden vorgegebenen Region auf dem Bildschirm basierend sowohl auf einem erkannten Benutzer, der derzeit den Bildschirm steuert, als auch auf einem Ort des Zeigers,
wobei die in der Tafel enthaltenen Ausführungsmenüelemente gemäß einem durch den erkannten Benutzer gewählten Thema und/oder einer Häufigkeit, mit der die Ausführungsmenüelemente durch den Benutzer früher verwendet wurden, unterschiedlich konfiguriert sind.

2. Verfahren gemäß Anspruch 1, wobei das Anzeigen der vorgegebenen Region auf dem Bildschirm als die Zuordnungsregion der in der Tafel enthaltenen Ausführungsmenüelemente ein Anzeigen der Zuordnungsregion einschließlich einer ersten Region, die eine obere Seite des Bildschirms einschließt, einer zweiten Region, die eine linke Seite des Bildschirms einschließt, einer dritten Region, die eine rechte Seite des Bildschirms einschließt, und einer vierten Region, die eine untere Seite des Bildschirms einschließt, einschließt.

3. Verfahren gemäß Anspruch 2, des Weitern umfassend:
Erkennen des Orts des Zeigers; und
Ausführen einer Funktion oder Anwendung, die in einem Ausführungsmenüelement, das der Seite zugeordnet ist, zu der sich der Zeiger bewegt, eingeschlossen ist.

4. Verfahren gemäß Anspruch 3, wobei das Ausführen der Funktion oder der Anwendung ein Scrollen und Anzeigen eines Ausführungsbildschirms der Funktion oder Anwendung von der Seite, zu der sich der Zeiger bewegt, einschließt.

5. Verfahren gemäß Anspruch 1, wobei das Empfangen des Zuordnungssignals umfasst:
Bewegen eines bestimmten Ausführungsmenüelements aus den in der Tafel enthaltenen Ausführungsmenüelementen durch den Zeiger zu der Zuordnungsregion; und
Zuordnen des bestimmten Ausführungsmenüelements zu der Zuordnungsregion.

6. Verfahren gemäß Anspruch 5, wobei das Bewegen des bestimmten Ausführungsmenüelements ein Erkennen, dass sich das bestimmte Ausführungsmenüelement für ein Zuordnen zu der Zuordnungsregion bewegt, einschließt.

7. Verfahren gemäß Anspruch 1, wobei die UI- Einstellungsinformationen, die vorher festgelegt wurden, in der Lage sind, durch Drag-and-Drop des Ausführungsmenüelement in die vorgegebene Region bearbeitet zu werden, wobei die UI angezeigt wird, wenn eine Bewegungsgeschwindigkeit oder eine Beschleunigung des Zeigers gleich oder größer als eine Schwellwertgeschwindigkeit ist, und wobei der Zeiger durch ein bewegungserfassendes Verfahren und/oder ein Augeverfolgungsverfahren bewegt wird.

8. Verfahren gemäß Anspruch 2, wobei das Speichern der UI-Einstellungsinformationen ein Zuordnen von Benutzerkonten von verschiedenen E-Mail-Services zu der ersten bis vierte Region umfasst, wenn das Ausführungsmenüelement ein E-Mail-Service ist.

9. Bildanzeigeeinrichtung zum Einstellen einer Benutzerschnittstelle (user interface, UI), umfassend:
eine Anzeige eingerichtet zum Anzeigen von Inhalten, die durch die Bildanzeigeeinrichtung empfangen werden, und einem Zeiger zum Steuern der Bildanzeigeeinrichtung;
eine Benutzerschnittstelle eingerichtet zum Empfangen eines Bewegungssignals und eines Steuersignals des Zeigers;
eine UI-Einstellungseinheit eingerichtet zum Speichern einer UI-Einstellungssache; und
eine Steuerung eingerichtet zum Steuern des Anzeigens einer Tafel, die Ausführungsmenüelemente von verfügbaren Anwendungen und Funktionen der Bildanzeigeeinrichtung enthält, zum Anzeigen einer oder mehrerer vorgegebener Regionen auf einem Bildschirm als eine Zuordnungsregion der in der Tafel enthaltenen Ausführungsmenüelemente, zum Empfangen eines Zuordnungssignals zum Zuordnen der in der Tafel enthaltenen Ausführungsmenüelemente zu der Zuordnungsregion, wenn ein UI-Einstellungssignal empfangen wird, und zum Speichern von UI-Einstellungsinformationen basierend auf dem empfangenen Zuordnungssignal jeweils für eine Vielzahl von Benutzern,
**dadurch gekennzeichnet, dass** die Steuerung des Weiteren eingerichtet ist zum Steuern des Anzeigens einer entsprechenden vorgegebenen Region auf dem Bildschirm basierend sowohl auf einem erkannten Benutzer, der aktuell den Bildschirm steuert, als auch auf einem Ort des Zeigers, wenn der Zeiger mit der einen oder den mehreren vorgegebenen Regionen des Bildschirms in Kontakt gebracht wird,
wobei die Steuerung des Weiteren eingerichtet ist zum:
unterschiedlichen Konfigurieren der in der Tafel enthaltenen Ausführungsmenüelemente gemäß einem durch den erkannten Benutzer gewählten Thema und/oder einer Häufigkeit, mit der die Ausführungsmenüelemente durch den, Benutzer früher verwendet wurden.

10. Bildanzeigeeinrichtung gemäß Anspruch 9, wobei die Anzeige die Zuordnungsregion einschließlich einer ersten Region, die eine obere Seite des Bildschirms einschließt, einer zweiten Region, die eine linke Seite des Bildschirms einschließt, einer dritten Region, die eine rechte Seite des Bildschirms einschließt, und einer vierten Region, die eine untere Seite des Bildschirms einschließt, anzeigt.

11. Bildanzeigeeinrichtung gemäß Anspruch 10, wobei die Steuerung den Ort des Zeigers erkennt, und eine Funktion oder Anwendung, die in einem Ausführungsmenüelement, das der Seite zugeordnet ist, zu der sich der Zeiger bewegt, eingeschlossen ist, ausführt.

12. Bildanzeigeeinrichtung gemäß Anspruch 11, wobei die Steuerung einen Ausführungsbildschirm der Funktion oder Anwendung von der Seite, zu der sich der Zeiger bewegt, scrollt und anzeigt.

13. Bildanzeigeeinrichtung gemäß Anspruch 9, wobei die Steuerung ein Bewegungssignal zum Bewegen eines bestimmten Ausführungsmenüelements aus den in der Tafel enthaltenen Ausführungsmenüelementen durch den Zeiger zu der Zuordnungsregion empfängt, und das bestimmte Ausführungsmenüelement der Zuordnungsregion zuordnet.

14. Bildanzeigeeinrichtung gemäß Anspruch 9, wobei die Steuerung erkennt, dass sich das bestimmte Ausführungsmenüelement für ein Zuordnen zu der Zuordnungsregion bewegt, und wobei die UI- Einstellungsinformationen, die vorher festgelegt wurden, in der Lage sind, durch Drag-and-Drop der Ausführungsmenüelemente in die vorgegebene Region bearbeitet zu werden, wobei die UI angezeigt wird, wenn eine Bewegungsgeschwindigkeit oder eine Beschleunigung des Zeigers gleich oder größer als eine Schwellwertgeschwindigkeit ist, und wobei der Zeiger durch ein bewegungserfassendes Verfahren und/oder ein Augeverfolgungsverfahren bewegt wird.

## Revendications

1. Procédé de paramétrage d'une interface utilisateur, UI, d'un dispositif d'affichage d'images, le procédé comprenant les étapes consistant à :
recevoir un signal de paramétrage d'interface utilisateur ;
afficher un tableau comprenant des éléments de menu d'exécution des applications et fonctions disponibles du dispositif d'affichage d'images et une ou plusieurs régions prédéterminées sur un écran d'affichage en tant que région de représentation des éléments de menu d'exécution contenus dans le tableau ;
recevoir un signal de représentation destiné à représenter les éléments de menu d'exécution contenus dans le tableau sur la ou les plusieurs régions prédéterminées ;
stocker des informations de paramétrage d'interface utilisateur sur la base du signal de représentation reçu pour une pluralité d'utilisateurs, respectivement ; et
afficher un contenu et un pointeur pour commander le dispositif d'affichage d'images sur l'écran d'affichage ;
**caractérisé par** l'étape consistant à
si le pointeur est mis en contact avec la ou les plusieurs régions prédéterminées de l'écran d'affichage, afficher une région prédéterminée correspondante sur l'écran d'affichage sur la base à la fois d'un utilisateur reconnu qui commande actuellement le dispositif d'affichage d'images et d'un emplacement du pointeur,
dans lequel les éléments de menu d'exécution contenus dans le tableau sont configurés différemment conformément à l'un quelconque parmi un thème sélectionné par l'utilisateur reconnu et une fréquence à laquelle les éléments de menu d'exécution ont été utilisés au préalable par l'utilisateur.

2. Procédé selon la revendication 1, dans lequel l'affichage de la région prédéterminée de l'écran d'affichage en tant que région de représentation des éléments de menu d'exécution contenus dans le tableau comprend l'affichage de la région de représentation contenant une première région incluant un côté supérieur de l'écran d'affichage, une deuxième région incluant un côté gauche de l'écran d'affichage, une troisième région incluant un côté droit de l'écran d'affichage et une quatrième région incluant un côté inférieur de l'écran d'affichage.

3. Procédé selon la revendication 2, comprenant en outre les étapes consistant à:
détecter l'emplacement du pointeur ; et
exécuter une fonction ou une application contenue dans un élément de menu d'exécution représenté sur le côté vers lequel le pointeur se déplace.

4. Procédé selon la revendication 3, dans lequel l'exécution de la fonction ou de l'application comprend le défilement et l'affichage d'un écran d'exécution de la fonction ou de l'application à partir du côté vers lequel le pointeur se déplace.

5. Procédé selon la revendication 1, dans lequel la réception du signal de représentation comprend les étapes consistant à :
déplacer un élément de menu d'exécution spécifique parmi les éléments de menu d'exécution contenus dans le tableau vers la région de représentation par l'intermédiaire du pointeur ; et
représenter l'élément de menu d'exécution spécifique sur la région de représentation.

6. Procédé selon la revendication 5, dans lequel le déplacement de l'élément de menu d'exécution spécifique inclut la reconnaissance que l'élément de menu d'exécution spécifique se déplace pour la représentation sur la région de représentation.

7. Procédé selon la revendication 1, dans lequel les informations de paramétrage d'interface utilisateur, qui ont été établies au préalable, sont capables d'éditer en glissant et déposant les éléments de menu d'exécution sur la région prédéterminée, dans laquelle l'interface utilisateur est affichée si une vitesse de déplacement ou une accélération du pointeur est égale ou supérieure à une vitesse de seuil, et dans laquelle le pointeur est déplacé par un procédé de détection de mouvement et/ou un procédé d'oculométrie.

8. Procédé selon la revendication 2, dans lequel le stockage des informations de paramétrage d'interface utilisateur comprend la représentation de comptes utilisateurs de différents services de courrier électronique sur les première à quatrième régions, si l'élément de menu d'exécution est un service de courrier électronique.

9. Dispositif d'affichage d'images pour le paramétrage d'une interface utilisateur, UI, comprenant :
un affichage configuré pour afficher un contenu reçu par le dispositif d'affichage d'images et un pointeur destiné à commander le dispositif d'affichage d'images ;
une interface utilisateur configurée pour recevoir un signal de déplacement et un signal de commande du pointeur ;
une unité de paramétrage d'interface utilisateur configurée pour stocker un paramétrage d'interface utilisateur ; et
un contrôleur configuré pour commander l'affichage d'un tableau contenant des éléments de menu d'exécution des applications et fonctions disponibles du dispositif d'affichage d'images, afficher une ou plusieurs régions prédéterminées d'un écran d'affichage en tant que région de représentation des éléments de menu d'exécution contenus dans le tableau, recevoir un signal de représentation destiné à représenter les éléments de menu d'exécution contenus dans le tableau sur la région de représentation, si un signal de paramétrage d'interface utilisateur est reçu, et stocker des informations de paramétrage d'interface utilisateur sur la base du signal de représentation reçu pour une pluralité d'utilisateurs, respectivement,
**caractérisé en ce que** le contrôleur est en outre configuré pour commander l'affichage d'une région prédéterminée correspondante sur l'écran d'affichage sur la base à la fois d'un utilisateur reconnu qui commande actuellement le dispositif d'affichage d'images et d'un emplacement du pointeur, si le pointeur est mis en contact avec la ou les plusieurs régions prédéterminées de l'écran d'affichage,
dans lequel le contrôleur est en outre configuré pour :
configurer différemment les éléments de menu d'exécution contenus dans le tableau conformément à l'un quelconque parmi un thème sélectionné par l'utilisateur reconnu et une fréquence à laquelle les éléments de menu d'exécution ont été utilisés au préalable par l'utilisateur.

10. Dispositif d'affichage d'images selon la revendication 9, dans lequel l'affichage affiche la région de représentation comprenant une première région incluant un côté supérieur de l'écran d'affichage, une deuxième région incluant un côté gauche de l'écran d'affichage, une troisième région incluant un côté droit de l'écran d'affichage et une quatrième région incluant un côté inférieur de l'écran d'affichage.

11. Dispositif d'affichage d'images selon la revendication 10, dans lequel le contrôleur détecte l'emplacement du pointeur, et exécute une fonction ou une application contenue dans un élément de menu d'exécution représenté sur le côté vers lequel le pointeur se déplace.

12. Dispositif d'affichage d'images selon la revendication 11, dans lequel le contrôleur fait défiler et affiche un écran d'exécution de la fonction ou application à partir du côté vers lequel le pointeur se déplace.

13. Dispositif d'affichage d'images selon la revendication 9, dans lequel le contrôleur reçoit un signal de déplacement destiné à déplacer un élément de menu d'exécution spécifique parmi les éléments de menu d'exécution contenus dans le tableau sur la région de représentation par l'intermédiaire du pointeur, et représente l'élément de menu d'exécution spécifique sur la région de représentation.

14. Dispositif d'affichage d'images selon la revendication 9, dans lequel le contrôleur reconnaît que l'élément de menu d'exécution spécifique se déplace pour une représentation sur la région de représentation, et dans lequel les informations de paramétrage d'interface utilisateur, qui ont été établies au préalable, sont capables d'éditer en glissant et déposant les éléments de menu d'exécution sur la région prédéterminée, dans laquelle l'interface utilisateur est affichée si une vitesse de déplacement ou une accélération du pointeur est égale ou supérieure à un seuil prédéterminé, et dans laquelle le pointeur est déplacé par un procédé de détection de mouvement et/ou un procédé d'oculométrie.
